# EUROPEAN PATENT APPLICATION

(11) **EP 4 783 714 A1**
(43) Date of publication of application: **29.07.2026**
(21) Application number: 23952623.9
(22) Date of filing: 21.09.2023
(51) Int. Cl.: H04W 74/08, H04L 1/18

(54) **CONFIGURATION METHOD FOR DYNAMIC GRANT-FREE TRANSMISSION CONFIGURATION AND RELATED APPARATUS**

(71) Applicant: HUAWEI TECHNOLOGIES CO., LTD., Shenzhen 518129 (CN)
(72) Inventor: XU, Xiuqiang, Shenzhen, Guangdong 518129 (CN); WANG, Fan, Shenzhen, Guangdong 518129 (CN); CHEN, Yan, Shenzhen, Guangdong 518129 (CN)
(74) Representative: Körber, Martin Hans
(86) International application number: PCT/CN2023/120289
(87) International publication number: WO 2025/059966

(57) **Abstract**

This application provides a method for configuring a transmission configuration without dynamic grant and a related apparatus. The method includes: A terminal apparatus receives downlink control information/sidelink control information sent by a first apparatus, where the downlink control information/sidelink control information is used for retransmission and is used to configure a first transmission configuration without dynamic grant; and the terminal apparatus determines first configuration information of the first transmission configuration without dynamic grant based on the downlink control information/sidelink control information. According to the technical solutions provided in this application, configuration information without dynamic grant can be updated with a high speed and low overheads.

## Description

### TECHNICAL FIELD

This application relates to the field of communication technologies, and in particular, to a method for configuring a transmission configuration without dynamic grant and a related apparatus.

### BACKGROUND

A transmission technology without dynamic grant (without dynamic grant) means that a base station configures, for a terminal in a semi-static (semi-static) manner by using higher layer signaling and/or physical layer signaling, a transmission resource and a transmission parameter that are used for uplink data transmission. There are two types of uplink without dynamic grant: Type 1 configured grant (Type 1 configured grant, Type 1 CG) and Type 2 configured grant (Type 2 configured grant, Type 2 CG).

In the Type 1 configured grant, the base station delivers configured grant configuration information (configured grant configuration) to the terminal by using radio resource control (radio resource control, RRC) signaling. The configuration information is used to configure all transmission resources and transmission parameters. After receiving the RRC signaling, the terminal may immediately transmit data by using the grant configuration information configured by using the RRC signaling.

In the Type 2 configured grant, the base station first delivers configured grant configuration information to the terminal by using RRC signaling, where the configuration information is used to configure some transmission resources and transmission parameters; and then the base station delivers downlink control information (downlink control information, DCI) to the terminal, to activate uplink data transmission based on the Type 2 configured grant, and delivers the configured grant configuration information at the same time, where the configuration information is used to configure the other transmission resources and transmission parameters. After receiving the RRC signaling, the terminal cannot immediately transmit data by using the grant configuration information configured by using the RRC signaling, but can transmit, only after receiving corresponding activation DCI, data by using the grant configuration information configured by using the RRC signaling and the activation DCI.

Downlink without dynamic grant may also be referred to as semi-persistent scheduling (semi-persistent scheduling, SPS). A mechanism of the downlink without dynamic grant is similar to that of the Type 2 configured grant. The base station delivers SPS configuration information to the terminal by using RRC signaling. After receiving the RRC signaling, the terminal cannot immediately receive downlink data by using the SPS configuration information configured by using the RRC signaling, but can receive, only after receiving corresponding activation DCI, downlink data by using the SPS configuration information configured by using the RRC signaling and the activation DCI.

Currently, when configuration information without dynamic grant needs to be updated, for the Type 1 CG, the base station needs to update the configuration information by re-delivering RRC signaling; and for the Type 2 CG or SPS, the base station needs to update the configuration information by re-delivering RRC signaling or activation DCI. However, a delivery periodicity of the RRC signaling is generally long. As a result, a speed of updating the configuration information is low, and a channel change cannot be quickly matched. Consequently, performance of transmission without dynamic grant may be degraded. In addition, delivery of the RRC signaling or the activation DCI and blind detection on the activation DCI by the terminal cause high overheads.

### SUMMARY

Embodiments of this application provide a method for configuring a transmission configuration without dynamic grant, and a related apparatus, to update configuration information without dynamic grant with a high speed and low overheads.

According to a first aspect, an embodiment of this application provides a method for configuring a transmission configuration without dynamic grant. The method includes:
A terminal apparatus receives downlink control information/sidelink control information sent by a first apparatus, where the downlink control information/sidelink control information is used for retransmission and is used to configure a first transmission configuration without dynamic grant; and
the terminal apparatus determines first configuration information of the first transmission configuration without dynamic grant based on the downlink control information/sidelink control information.

Optionally, the first apparatus is a network apparatus, and the method may be used in a scenario of air interface link transmission without dynamic grant.

Optionally, the first apparatus is another terminal apparatus, and the method may be used in a scenario of sidelink transmission without dynamic grant.

In the foregoing embodiment, the first apparatus may add, to the downlink control information/sidelink control information originally used for retransmission, information indicating that the DCI/SCI is used to configure the first transmission configuration without dynamic grant, so that the downlink control information/sidelink control information may also be used to configure the first transmission configuration without dynamic grant. Therefore, when the transmission configuration without dynamic grant between the terminal apparatus and the first apparatus needs to be updated (in other words, configured, reconfigured, activated, or reactivated), the first apparatus may simultaneously update the transmission configuration without dynamic grant by sending the downlink control information/sidelink control information to the terminal apparatus, and does not need to update the transmission configuration without dynamic grant by specially sending RRC signaling or activation information to the terminal apparatus, to reduce overheads. In addition, the downlink control information/sidelink control information is physical layer (or referred to as L1 layer) signaling, the RRC signaling is higher layer signaling, and a delivery periodicity of the downlink control information/sidelink control information is shorter than that of the RRC signaling, so that an update speed of the transmission configuration without dynamic grant can be increased. In addition, the terminal apparatus has natural feedback for the downlink control information/sidelink control information. Therefore, the terminal apparatus does not need to specifically confirm the transmission configuration without dynamic grant, to further reduce overheads.

In a possible implementation, the downlink control information/sidelink control information includes a first indicator field, and a first value of the first indicator field indicates that the downlink control information/sidelink control information is used for retransmission.

In the foregoing implementation, the first value of the first indicator field in the downlink control information/sidelink control information indicates that the downlink control information/sidelink control information is used for retransmission. Therefore, the terminal apparatus may determine, based on a value of the first indicator field, whether the downlink control information/sidelink control information is used for retransmission.

In a possible implementation, the downlink control information/sidelink control information includes a second indicator field, and a second value of the second indicator field indicates that the downlink control information/sidelink control information is used to configure the first transmission configuration without dynamic grant.

In the foregoing implementation, the second value of the second indicator field in the downlink control information/sidelink control information indicates that the downlink control information/sidelink control information is used to configure the first transmission configuration without dynamic grant. Therefore, the terminal apparatus may determine, based on a value of the second indicator field, whether the downlink control information/sidelink control information is used to configure the first transmission configuration without dynamic grant.

In a possible implementation, the downlink control information/sidelink control information includes a third indicator field, the third indicator field indicates the first configuration information of the first transmission configuration without dynamic grant, and the first configuration information includes at least one transmission resource and/or transmission parameter.

In the foregoing implementation, the third indicator field in the downlink control information/sidelink control information indicates the first configuration information of the first transmission configuration without dynamic grant. Therefore, the terminal apparatus may determine the first configuration information of the first transmission configuration without dynamic grant based on the third indicator field.

In a possible implementation, the third indicator field includes one indicator field, and the indicator field indicates the first configuration information.

In the foregoing implementation, one indicator field in the downlink control information/sidelink control information indicates the first configuration information of the first transmission configuration without dynamic grant, that is, one indicator field may indicate all transmission resources and/or transmission parameters in the first configuration information, to reduce indication overheads. The terminal apparatus may determine all transmission resources and/or transmission parameters in the first configuration information at a time based on the indicator field, to help improve efficiency of obtaining the first configuration information.

In a possible implementation, the third indicator field includes a plurality of indicator fields, and each of the plurality of indicator fields indicates a corresponding transmission resource and/or transmission parameter.

In the foregoing implementation, the first configuration information of the first transmission configuration without dynamic grant is indicated by using a plurality of indicator fields that are in the downlink control information/sidelink control information and that correspond to the transmission resource and/or the transmission parameter, so that the transmission resource and/or the transmission parameter in the first configuration information can be separately indicated. This has good flexibility, and helps meet a requirement for diversified configuration information.

In a possible implementation, the downlink control information/sidelink control information includes a fourth indicator field, the fourth indicator field indicates the first transmission configuration without dynamic grant, the fourth indicator field corresponds to a plurality of transmission configurations without dynamic grant, and the first transmission configuration without dynamic grant is included in the plurality of transmission configurations without dynamic grant.

In the foregoing implementation, when there are a plurality of transmission configurations without dynamic grant, the fourth indicator field in the downlink control information/sidelink control information indicates the first transmission configuration without dynamic grant. Therefore, the terminal apparatus may determine, based on the value of the fourth indicator field, which one of the plurality of transmission configurations without dynamic grant needs to be configured.

In a possible implementation, the downlink control information/sidelink control information includes a fifth indicator field, and the fifth indicator field indicates a modulation order of current retransmission, or adjustment information of the modulation order of the current retransmission relative to a modulation order of initial transmission or previous retransmission.

In the foregoing implementation, the fifth indicator field in the downlink control information/sidelink control information indicates the modulation order of the current retransmission, or the adjustment information of the modulation order of the current retransmission relative to the modulation order of the initial transmission or the previous retransmission. Therefore, the terminal apparatus may determine, based on the value of the fifth indicator field, the modulation order to be used for the current retransmission.

In a possible implementation, the second indicator field, the third indicator field, or the fifth indicator field is a modulation and coding scheme MCS field.

In the foregoing implementation, the modulation and coding scheme MCS field has five bits, and when the downlink control information/sidelink control information is used for retransmission, the modulation and coding scheme MCS field needs to occupy only four values. Therefore, the modulation and coding scheme MCS field has a redundant bit that may indicate other information, so that an indication resource can be fully used, to reduce indication overheads.

According to a second aspect, an embodiment of this application provides a method for configuring a transmission configuration without dynamic grant. The method includes:
A first apparatus determines downlink control information/sidelink control information, where the downlink control information/sidelink control information is used for retransmission and is used to configure a first transmission configuration without dynamic grant; and
the first apparatus sends the downlink control information/sidelink control information to a terminal apparatus.

Optionally, the first apparatus may be a network apparatus, and the method may be used in a scenario of air interface link transmission without dynamic grant.

Optionally, the first apparatus is another terminal apparatus, and the method may be used in a scenario of sidelink transmission without dynamic grant.

In the foregoing embodiment, the first apparatus may add, to the downlink control information/sidelink control information originally used for retransmission, information indicating that the downlink control information/sidelink control information is used to configure the first transmission configuration without dynamic grant, so that the downlink control information/sidelink control information may also be used to configure the first transmission configuration without dynamic grant. Therefore, when the transmission configuration without dynamic grant between the terminal apparatus and the first apparatus needs to be updated (in other words, configured, reconfigured, activated, or reactivated), the first apparatus may simultaneously update the transmission configuration without dynamic grant by sending the downlink control information/sidelink control information to the terminal apparatus, and does not need to update the transmission configuration without dynamic grant by specially sending RRC signaling or activation information to the terminal apparatus, to reduce overheads. In addition, the downlink control information/sidelink control information is physical layer (or referred to as L1 layer) signaling, the RRC signaling is higher layer signaling, and a delivery periodicity of the downlink control information/sidelink control information is shorter than that of the RRC signaling, so that an update speed of the transmission configuration without dynamic grant can be increased. In addition, the terminal apparatus has natural feedback for the downlink control information/sidelink control information. Therefore, the terminal apparatus does not need to specifically confirm the transmission configuration without dynamic grant, to further reduce overheads.

In a possible implementation, the downlink control information/sidelink control information includes a first indicator field, and a first value of the first indicator field indicates that the downlink control information/sidelink control information is used for retransmission.

In a possible implementation, the downlink control information/sidelink control information includes a second indicator field, and a second value of the second indicator field indicates that the downlink control information/sidelink control information is used to configure the first transmission configuration without dynamic grant.

In a possible implementation, the downlink control information/sidelink control information includes a third indicator field, the third indicator field indicates first configuration information of the first transmission configuration without dynamic grant, and the first configuration information includes at least one transmission resource and/or transmission parameter.

In a possible implementation, the third indicator field includes one indicator field, and the indicator field indicates the first configuration information.

In a possible implementation, the third indicator field includes a plurality of indicator fields, and each of the plurality of indicator fields indicates a corresponding transmission resource and/or transmission parameter.

In a possible implementation, the downlink control information/sidelink control information includes a fourth indicator field, the fourth indicator field indicates the first transmission configuration without dynamic grant, the fourth indicator field corresponds to a plurality of transmission configurations without dynamic grant, and the first transmission configuration without dynamic grant is included in the plurality of transmission configurations without dynamic grant.

In a possible implementation, the downlink control information/sidelink control information includes a fifth indicator field, and the fifth indicator field indicates a modulation order of current retransmission, or adjustment information of the modulation order of the current retransmission relative to a modulation order of initial transmission or previous retransmission.

In a possible implementation, the second indicator field, the third indicator field, or the fifth indicator field is a modulation and coding scheme MCS field.

According to a third aspect, an embodiment of this application provides an apparatus for configuring a transmission configuration without dynamic grant, where the apparatus includes modules or units configured to perform the method according to any one of the first aspect or the possible implementations of the first aspect.

In a possible implementation, the apparatus includes:
a transceiver unit, configured to receive downlink control information/sidelink control information sent by a first apparatus, where the downlink control information/sidelink control information is used for retransmission and is used to configure a first transmission configuration without dynamic grant; and
a processing unit, configured to determine first configuration information of the first transmission configuration without dynamic grant based on the downlink control information/sidelink control information.

In a possible implementation, the downlink control information/sidelink control information includes a first indicator field, and a first value of the first indicator field indicates that the downlink control information/sidelink control information is used for retransmission.

In a possible implementation, the downlink control information/sidelink control information includes a second indicator field, and a second value of the second indicator field indicates that the downlink control information/sidelink control information is used to configure the first transmission configuration without dynamic grant.

In a possible implementation, the downlink control information/sidelink control information includes a third indicator field, the third indicator field indicates the first configuration information of the first transmission configuration without dynamic grant, and the first configuration information includes at least one transmission resource and/or transmission parameter.

In a possible implementation, the third indicator field includes one indicator field, and the indicator field indicates the first configuration information.

In a possible implementation, the third indicator field includes a plurality of indicator fields, and each of the plurality of indicator fields indicates a corresponding transmission resource and/or transmission parameter.

In a possible implementation, the downlink control information/sidelink control information includes a fourth indicator field, the fourth indicator field indicates the first transmission configuration without dynamic grant, the fourth indicator field corresponds to a plurality of transmission configurations without dynamic grant, and the first transmission configuration without dynamic grant is included in the plurality of transmission configurations without dynamic grant.

In a possible implementation, the downlink control information/sidelink control information includes a fifth indicator field, and the fifth indicator field indicates a modulation order of current retransmission, or adjustment information of the modulation order of the current retransmission relative to a modulation order of initial transmission or previous retransmission.

In a possible implementation, the second indicator field, the third indicator field, or the fifth indicator field is a modulation and coding scheme MCS field.

According to a fourth aspect, an embodiment of this application provides an apparatus for configuring a transmission configuration without dynamic grant, where the apparatus includes modules or units configured to perform the method according to any one of the second aspect or the possible implementations of the second aspect.

In a possible implementation, the apparatus includes:
a processing unit, configured to determine downlink control information/sidelink control information, where the downlink control information/sidelink control information is used for retransmission and is used to configure a first transmission configuration without dynamic grant; and
a transceiver unit, configured to send the downlink control information/sidelink control information to a first terminal apparatus.

In a possible implementation, the downlink control information/sidelink control information includes a first indicator field, and a first value of the first indicator field indicates that the downlink control information/sidelink control information is used for retransmission.

In a possible implementation, the downlink control information/sidelink control information includes a second indicator field, and a second value of the second indicator field indicates that the downlink control information/sidelink control information is used to configure the first transmission configuration without dynamic grant.

In a possible implementation, the downlink control information/sidelink control information includes a third indicator field, the third indicator field indicates first configuration information of the first transmission configuration without dynamic grant, and the first configuration information includes at least one transmission resource and/or transmission parameter.

In a possible implementation, the third indicator field includes one indicator field, and the indicator field indicates the first configuration information.

In a possible implementation, the third indicator field includes a plurality of indicator fields, and each of the plurality of indicator fields indicates a corresponding transmission resource and/or transmission parameter.

In a possible implementation, the downlink control information/sidelink control information includes a fourth indicator field, the fourth indicator field indicates the first transmission configuration without dynamic grant, the fourth indicator field corresponds to a plurality of transmission configurations without dynamic grant, and the first transmission configuration without dynamic grant is included in the plurality of transmission configurations without dynamic grant.

In a possible implementation, the downlink control information/sidelink control information includes a fifth indicator field, and the fifth indicator field indicates a modulation order of current retransmission, or adjustment information of the modulation order of the current retransmission relative to a modulation order of initial transmission or previous retransmission.

In a possible implementation, the second indicator field, the third indicator field, or the fifth indicator field is a modulation and coding scheme MCS field.

According to a fifth aspect, an embodiment of this application provides an electronic device. The electronic device includes a processor. The processor is coupled to a memory, and may be configured to execute a computer program or instructions in the memory, to implement the method according to either of the first aspect and the second aspect or any one of the possible implementations of the first aspect and the second aspect. Optionally, the electronic device further includes the memory. Optionally, the electronic device further includes a communication interface, and the processor is coupled to the communication interface.

According to a sixth aspect, an embodiment of this application provides a computer-readable storage medium. The computer-readable storage medium stores a computer program or instructions. When the computer program or the instructions are executed, the method according to either of the first aspect and the second aspect or any one of the possible implementations of the first aspect and the second aspect is implemented.

According to a seventh aspect, an embodiment of this application provides a computer program product. The computer program product includes a computer program or instructions. When the computer program or the instructions are executed, the method according to either of the first aspect and the second aspect or any one of the possible implementations of the first aspect and the second aspect is implemented.

According to an eighth aspect, an embodiment of this application provides a chip. The chip includes a processor. The processor is configured to execute a computer program or instructions. When the processor executes the computer program or the instructions, the method according to either of the first aspect and the second aspect or any one of the possible implementations of the first aspect and the second aspect is implemented. Optionally, the chip further includes a communication interface, and the communication interface is configured to receive a signal or send a signal.

According to a ninth aspect, an embodiment of this application provides a chip. The chip includes a logic circuit and an input/output interface. The logic circuit is configured to: be coupled to the input/output interface, and transmit data through the input/output interface, to perform the method according to either of the first aspect and the second aspect or any one of the possible implementations of the first aspect and the second aspect.

According to a tenth aspect, an embodiment of this application provides a system. The system includes the apparatus according to any one of the third aspect or the possible implementations of the third aspect and the apparatus according to any one of the fourth aspect or the possible implementations of the fourth aspect.

According to an eleventh aspect, an embodiment of this application provides a system. The system includes a terminal apparatus and a first apparatus. The terminal apparatus is configured to perform the method according to any one of the first aspect or the possible implementations of the first aspect, and the first apparatus is configured to perform the method according to any one of the second aspect or the possible implementations of the second aspect.

For beneficial effects brought by the second aspect to the eleventh aspect, refer to descriptions of the beneficial effects in the first aspect. Details are not described herein again.

In addition, in a process of performing the method according to either of the first aspect and the second aspect and any one of the possible implementations of the first aspect and the second aspect, a process related to sending information and/or receiving information and the like in the method may be understood as a process of outputting information by a processor and/or a process of receiving input information by the processor. When outputting the information, the processor may output the information to a transceiver (or a communication interface or a sending module), so that the transceiver transmits the information. After the information is output by the processor, other processing may further need to be performed on the information before the information arrives at the transceiver. Similarly, when the processor receives the input information, the transceiver (or the communication interface or the sending module) receives the information, and inputs the information into the processor. Further, after the transceiver receives the information, other processing may need to be performed on the information before the information is input into the processor.

Based on the foregoing principle, for example, sending information in the foregoing method may be understood as outputting information by the processor. For another example, receiving information may be understood as receiving input information by the processor.

Optionally, operations such as transmission, sending, and receiving related to the processor may be more generally understood as operations such as output, receiving, and input of the processor, unless otherwise specified, or provided that the operations do not contradict actual functions or internal logic of the operations in related descriptions.

Optionally, in a process of performing the method according to either of the first aspect and the second aspect and any one of the possible implementations of the first aspect and the second aspect, the processor may be a processor specially configured to perform the method, or may be a processor, for example, a general-purpose processor, that performs the method by executing computer instructions in a memory. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

### BRIEF DESCRIPTION OF DRAWINGS

To describe the technical solutions in embodiments of this application more clearly, the following briefly describes the accompanying drawings used in embodiments of this application. Apparently, the accompanying drawings described below show merely some embodiments of this application, and a person of ordinary skill in the art may still derive other drawings from these accompanying drawings without creative efforts.
FIG. 1 is a diagram of uplink data transmission based on dynamic grant;
FIG. 2 is a diagram of uplink data transmission based on Type 1 configured grant;
FIG. 3 is a diagram of uplink data transmission based on Type 2 configured grant;
FIG. 4 is a diagram of a network architecture of a communication system according to an embodiment of this application;
FIG. 5 is a schematic flowchart of a method for configuring a transmission configuration without dynamic grant according to an embodiment of this application;
FIG. 6 is a diagram of a structure of an apparatus for configuring a transmission configuration without dynamic grant according to an embodiment of this application;
FIG. 7 is a diagram of a structure of an electronic device according to an embodiment of this application; and
FIG. 8 is a diagram of a structure of a chip according to an embodiment of this application.

### DESCRIPTION OF EMBODIMENTS

To make objectives, technical solutions, and advantages of this application clearer, the following describes embodiments of this application with reference to accompanying drawings in embodiments of this application.

In this application, the term "in an example", "for example", or the like is used to give an example, an illustration, or a description. Any embodiment or design scheme described as "in an example" or " for example" in this application should not be explained as being more preferred or having more advantages than another embodiment or design scheme. Exactly, use of the words such as "in an example" or "for example" is intended to present a related concept in a specific manner.

"First", "second", and the like mentioned in embodiments of this application do not limit a quantity and an execution sequence, and "first", "second", and the like are not necessarily different. In addition, terms such as "include", "including", and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned in this specification mean that particular features, structures, or characteristics described with reference to embodiments may be included in at least one embodiment of this application. The phrase shown in various locations in this specification may not necessarily refer to a same embodiment, and is not an independent or optional embodiment exclusive from another embodiment. It may be explicitly and implicitly understood by a person skilled in the art that, in embodiments of this application, unless otherwise specified or there is a logic conflict, terms and/or descriptions in embodiments are consistent and may be mutually referenced, and technical features in different embodiments may be combined based on an internal logical relationship thereof to form a new embodiment.

It should be understood that, in this application, "at least one" means one or more, and "a plurality of" means two or more. A term "and/or" is used to describe an association relationship between associated objects, and indicates that three relationships may exist. For example, "A and/or B" may indicate the following three cases: Only A exists, only B exists, and both A and B exist, where A and B may be singular or plural. The character "/" generally indicates an "or" relationship between the associated objects. The expression "at least one of the following items (pieces)" or a similar expression means any combination of these items, including a single item (piece) or any combination of a plurality of items (pieces). For example, at least one of a, b, or c may indicate a, b, c, "a and b", "a and c", "b and c", or "a, b, and c", where a, b, and c may be singular or plural.

In the descriptions of this application, an "indication" may include a direct indication and an indirect indication, or may include an explicit indication and an implicit indication. Information indicated by a piece of information is referred to as to-be-indicated information. In a specific implementation process, there are a plurality of manners of indicating the to-be-indicated information. For example, the to-be-indicated information may be directly indicated. For example, the to-be-indicated information, an index of the to-be-indicated information, or the like is indicated. For another example, the to-be-indicated information may alternatively be indirectly indicated by indicating other information, and there is an association relationship between the indicated other information and the to-be-indicated information. For another example, only a part of the to-be-indicated information may alternatively be indicated, and another part of the to-be-indicated information is known or pre-agreed on. In addition, specific information may alternatively be indicated by using an arrangement sequence of various pieces of information that is pre-agreed on (for example, stipulated in a protocol), to reduce indication overheads to some extent.

For ease of understanding of embodiments of this application, the following first describes technologies related to dynamic grant (dynamic grant) and being without dynamic grant (without dynamic grant). The dynamic grant may also be referred to as dynamic scheduling (dynamic scheduling), and being without dynamic grant may also be referred to as grant free (grant free) or configured grant (configured grant, CG). The following is described by using examples.

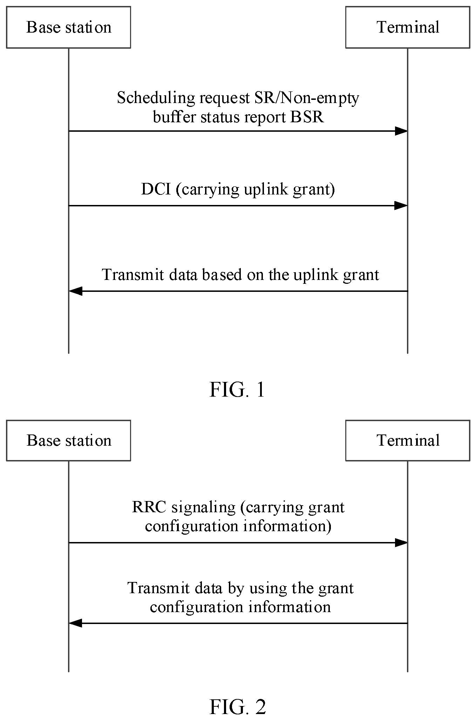

FIG. 1 is a diagram of uplink data transmission based on dynamic grant. As shown in FIG. 1, when a terminal needs to transmit uplink data, the terminal sends a scheduling request (scheduling request, SR) to a base station by using a physical uplink control channel (physical uplink control channel, PUCCH) or sends a non-empty buffer status report (buffer status report, BSR) to the base station by using a physical uplink shared channel (physical uplink shared channel, PUSCH). After receiving the SR or the BSR sent by the terminal, the base station sends downlink control information (downlink control information, DCI) to the terminal by using a physical downlink control channel (physical downlink control channel, PDCCH), where DCI carries uplink grant (uplink grant) for granting the terminal to send the uplink data by using a specified transmission resource and a specified transmission parameter. After receiving the DCI, the terminal may transmit the data based on the uplink grant.

In the foregoing uplink data transmission based on dynamic grant, real-time channel information between the terminal and the base station may be efficiently used, to specify a proper transmission resource and transmission parameter for each transmission of the terminal. However, each time before sending data, the terminal needs to send an SR or a BSR to the base station, and then the base station performs granting by using DCI. This process causes a transmission delay and PDCCH signaling overheads. In addition, to receive the PDCCH, the terminal usually needs to perform blind detection on different time-frequency resources based on different control channel element (control channel element, CCE) aggregation levels (aggregation level), different DCI formats (format), different DCI lengths, and different radio network temporary identifiers (radio network temporary identifier, RNTI). Therefore, a large amount of power consumption is required.

To reduce a transmission delay, signaling overheads, and terminal power consumption, a transmission technology without dynamic grant is introduced. A basic principle of the transmission technology without dynamic grant is that a base station configures, for the terminal in a semi-static (semi-static) manner by using higher layer signaling and/or physical layer signaling, a transmission resource and a transmission parameter that are used for uplink data transmission. When the terminal needs to transmit uplink data, the terminal does not need to experience a process of sending an SR or a BSR to the base station and waiting for uplink grant, but may directly send data to the base station by using the semi-statically configured transmission resource and transmission parameter, so that data can be transmitted immediately upon arrival. In this way, a transmission delay, signaling overheads, and terminal power consumption can be reduced.

There are two types of uplink without dynamic grant: Type 1 configured grant (Type 1 configured grant, Type 1 CG) and Type 2 configured grant (Type 2 configured grant, Type 2 CG).

FIG. 2 is a diagram of uplink data transmission based on Type 1 configured grant. As shown in FIG. 2, a base station delivers configured grant configuration information (configured grant configuration) to a terminal by using radio resource control (radio resource control, RRC) signaling, where the configuration information is used to configure all transmission resources and transmission parameters including a time domain resource periodicity, an open-loop power control related parameter, a waveform, a redundancy version (redundancy version, RV) sequence, a repetition number, a frequency hopping pattern, a resource allocation type, a hybrid automatic repeat request (hybrid automatic repeat request, HARQ) process number, a demodulation reference signal (demodulation reference signal, DMRS) related parameter, a modulation and coding scheme (modulation and coding scheme, MCS) table, a resource block group (resource block group, RBG) size, a time domain resource, a frequency domain resource, an MCS, and the like. After receiving the RRC signaling, the terminal may immediately transmit data by using the grant configuration information configured by using the RRC signaling.

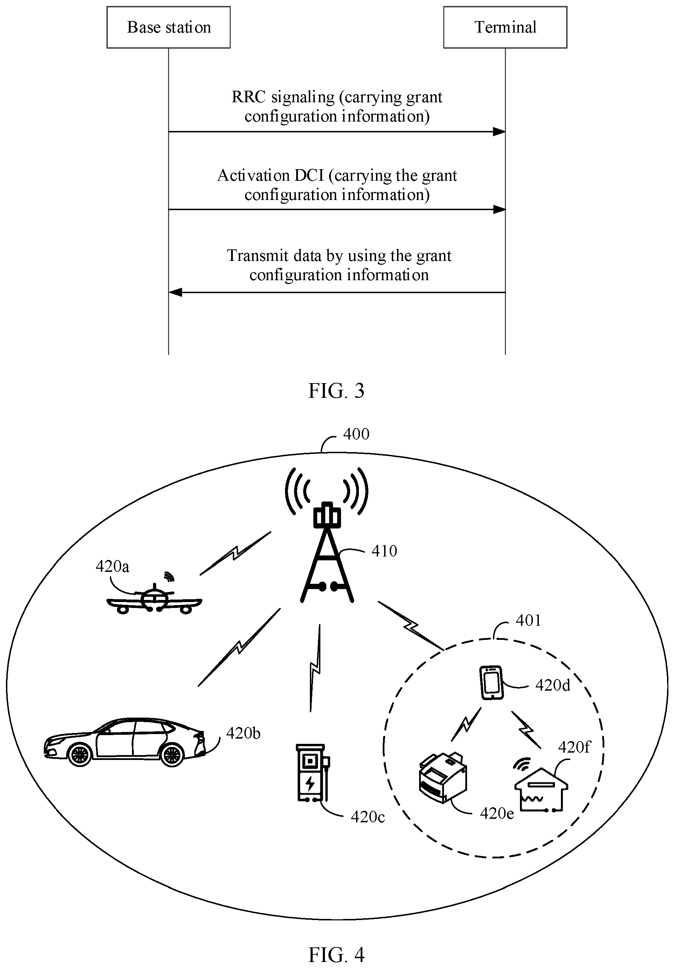

FIG. 3 is a diagram of uplink data transmission based on Type 2 configured grant. As shown in FIG. 3, the Type 2 configured grant is configured in a two-step manner. First, a base station delivers configured grant configuration information to a terminal by using RRC signaling. The configuration information is used to configure some transmission resources and transmission parameters including a time domain resource periodicity, an open-loop power control related parameter, a waveform, a redundancy version sequence, a repetition number, a frequency hopping pattern, a resource allocation type, a HARQ process number, a DMRS related parameter, an MCS table, an RBG size, and the like. Then, the base station delivers activation DCI to the terminal, to activate uplink data transmission based on the Type 2 configured grant, and delivers the configured grant configuration information at the same time. The configuration information is used to configure the other transmission resources and transmission parameters including a time domain resource, a frequency domain resource, an MCS, and the like. After receiving the RRC signaling, the terminal cannot immediately transmit data by using the grant configuration information configured by using the RRC signaling, but can transmit, only after receiving the corresponding activation DCI, the data by using the grant configuration information configured by using the RRC signaling and the activation DCI.

Downlink without dynamic grant may also be referred to as semi-persistent scheduling (semi-persistent scheduling, SPS). A mechanism of the downlink without dynamic grant may be similar to that of the Type 2 configured grant, and a two-step configuration manner is used. The base station delivers SPS configuration information to the terminal by using RRC signaling. After receiving the RRC signaling, the terminal cannot immediately receive downlink data by using the SPS configuration information configured by using the RRC signaling, but can receive, only after receiving the corresponding activation DCI, the downlink data by using the SPS configuration information configured by using the RRC signaling and the activation DCI.

Currently, when configuration information without dynamic grant needs to be updated, for the Type 1 CG, the base station needs to update the configuration information by re-delivering RRC signaling; and for the Type 2 CG or SPS, the base station needs to update the configuration information by re-delivering RRC signaling or activation DCI. However, a delivery periodicity of the RRC signaling is generally long. As a result, a speed of updating the configuration information is low, and a channel change cannot be quickly matched. Consequently, performance of transmission without dynamic grant may be degraded. In addition, delivery of the RRC signaling or the activation DCI and blind detection on the activation DCI by the terminal cause high overheads.

To resolve the foregoing problems, embodiments of this application provide a method for configuring a transmission configuration without dynamic grant and a related apparatus, to quickly update configuration information without dynamic grant and reduce overheads.

The technical solutions of embodiments of this application may be applied to various communication systems, for example, a global system for mobile communications (global system for mobile communication, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), an enhanced data rate for GSM evolution (enhanced data rate for GSM evolution, EDGE) system, and a worldwide interoperability for microwave access (worldwide interoperability for microwave access, WiMAX) system. The technical solutions of embodiments of this application may be further applied to another communication system, for example, a public land mobile network (public land mobile network, PLMN) system, a long term evolution advanced (LTE advanced, LTE-A) system, a 5th generation (5th generation, 5G) system, a new radio (new radio, NR) system (for example, a 6th generation (6th generation, 6G) system), a machine to machine (machine to machine, M2M) system, or another future evolved communication system. This is not limited in embodiments of this application.

The communication system includes at least two entities, and one entity may send data to the other entity or receive data sent by the other entity. The data herein may be but is not limited to: a physical signal, for example, a preamble or a reference signal; physical layer control information, for example, downlink control information (downlink control information, DCI) and uplink control information (uplink control information, UCI); control plane (control plane, CP) data, for example, a radio resource control (radio resource control, RRC) message; user plane (user plane, UP) data; or other information related to a specific scenario or application, for example, related data (such as gradient information, training data, and model parameters) generated by artificial intelligence (artificial intelligence, AI) or machine learning (machine learning, ML), or sensing-enabling function data or sensing-generated data.

FIG. 4 is a diagram of a network architecture of a communication system according to an embodiment of this application. As shown in FIG. 4, the network architecture 400 includes a network device 410 and a plurality of terminal devices (for example, a terminal device 420a, a terminal device 420b, a terminal device 420c, a terminal device 420d, a terminal device 420e, and a terminal device 420f). The network device 410 is communicatively connected to the terminal devices 420a to 420f separately, and the network device 410 may send data to the terminal devices 420a to 420f, or may receive data from the terminal devices 420a to 420f.

As shown in FIG. 4, the terminal devices may also be communicatively connected to each other. For example, the terminal device 420d, the terminal device 420e, and the terminal device 420f may also form a network architecture 401. The terminal device 420d is communicatively connected to the terminal device 420e and the terminal device 420f separately. The terminal device 420d may send data to the terminal device 420e and the terminal device 420f, or may receive data from the terminal device 420e and the terminal device 420f. For example, in a smart home scenario, a smart home terminal device may send a control instruction to another smart home terminal device, and after receiving the control instruction, the another smart home terminal device may perform a response operation or feed back status information. For another example, in an Internet of Vehicles scenario, an in-vehicle terminal device may send data to another in-vehicle terminal device, or may receive data from another in-vehicle terminal device.

Optionally, the network architecture may further include another device. For example, a relay node may be further included between the network device and a terminal device. This is not shown in FIG. 4. A form of the relay node may be a network device or a terminal device.

The network device in this embodiment of this application may include but is not limited to: a base station, the next generation NodeB (the next generation NodeB, gNB), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (home evolved NodeB, HeNB, or home NodeB, HNB), a baseband unit (baseband unit, BBU), a server, a wearable device, an in-vehicle device, or an access point (access point, AP), a wireless relay node, a wireless backhaul node, a transmission point (transmission point, TP), a transmission reception point (transmission reception point, TRP), or the like in a wireless fidelity (wireless fidelity, WI-FI) system; or may be a gNB, a TRP, or a TP in a 5G system, for example, a new radio (new radio, NR) system, or one antenna panel or one group of antenna panels of a base station in the 5G system; or may be a network node that forms a gNB or a TP, for example, a baseband unit or a distributed unit (distributed unit, DU). The base station may be a macro base station, a micro base station, a picocell base station, a small cell, a relay station, a balloon station, or the like. The base station may be a terrestrial (terrestrial) base station, or may be a non-terrestrial (non-terrestrial) base station, for example, a low earth orbit (low earth orbit, LEO)/very low earth orbit (very low earth orbit, VLEO) satellite, an unmanned aerial vehicle (unmanned aerial vehicle, UAV), or another high-altitude platform station (high-altitude platform station, HAPS).

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is generated by the CU, and is finally encapsulated at the PHY layer of the DU into information at the PHY layer, or is transformed from the information at the PHY layer. Therefore, in this architecture, higher layer signaling, for example, RRC layer signaling, may also be considered to be sent by the DU, or sent by the DU and the AAU. It may be understood that the network device may be a device including one or more of a CU node, a DU node, and an AAU node. In addition, the CU may be classified as a network device in a radio access network (radio access network, RAN), or the CU may be classified as a network device in a core network (core network, CN). This is not limited in this embodiment of this application.

The terminal device is a device having a wireless communication function, and may also be referred to as a terminal, a terminal apparatus, an access terminal, a subscriber unit, user equipment (user equipment, UE), a subscriber station, a mobile station, a mobile console, a remote station, a remote terminal, a mobile device, a user terminal, a wireless communication device, a user agent, or a user apparatus. The terminal device in this embodiment of this application may be a mobile phone (mobile phone), a pad (pad), a computer with a wireless transceiver function, a train, an airplane, a mobile Internet device (mobile Internet device, MID), a virtual reality (virtual reality, VR) terminal, an augmented reality (augmented reality, AR) terminal, a wireless terminal (for example, a robot) in industrial control (industrial control), a wireless terminal (for example, an in-vehicle device, a vehicle device, an in-vehicle module, or a vehicle) in the Internet of Vehicles, a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, an in-vehicle device, a wearable device, or the like. The terminal device may be a terminal device in an active state, a terminal device in an inactive state or an idle state, or a terminal device that is not in the foregoing three states, for example, a terminal device that is not attached to a network or that does not perform downlink synchronization with a network. A specific technology and a specific device form that are used by the terminal device are not limited in this embodiment of this application.

The network device and the terminal device may be at fixed locations, or may be movable. For example, the network device and the terminal device may be deployed on land, including being deployed indoors or outdoors, or in a handheld manner or a vehicle-mounted manner; may be deployed on water; or may be deployed on an airplane, a balloon, and a man-made satellite. Application scenarios of the network device and the terminal device are not limited in this embodiment of this application.

Communication between the network device and the terminal device, and communication between terminal devices may be performed by using a licensed (licensed) spectrum, or may be performed by using an unlicensed (unlicensed) spectrum, or may be performed by using both a licensed spectrum and an unlicensed spectrum. The communication may be applied to a high-frequency scenario, for example, millimeter wave and terahertz (terahertz, THz) frequency bands, or may be applied to a low-frequency scenario below 6 GHz (Sub-6G), for example, 700/900 MHz and 2.1/2.6/3.5 GHz frequency bands. A spectrum resource used by wireless communication is not limited in this embodiment of this application.

The network architecture (for example, the network architecture 400 or the network architecture 401) shown in FIG. 4 is applicable to a method for configuring a transmission configuration without dynamic grant provided in embodiments of this application. The method for configuring a transmission configuration without dynamic grant provided in embodiments of this application may be used in a scenario of air interface link transmission without dynamic grant between a terminal device (for example, any terminal device in the terminal devices 420a to 420f) and a network device (for example, the network device 410), for example, a transmission scenario based on Type 1 CG, Type 2 CG, SPS, or a preconfigured uplink resource (preconfigured uplink resource, PUR), or may be used in a scenario of sidelink transmission without dynamic grant between a terminal device (for example, the terminal device 420d) and a terminal device (for example, the terminal device 420e or the terminal device 420f).

It may be understood that the network architecture shown in FIG. 4 is merely an example for description, and a network architecture applicable to embodiments of this application is not limited thereto. Any network architecture that can implement functions of some or all of the foregoing devices is applicable to embodiments of this application.

The following describes a method for configuring a transmission configuration without dynamic grant provided in an embodiment of this application.

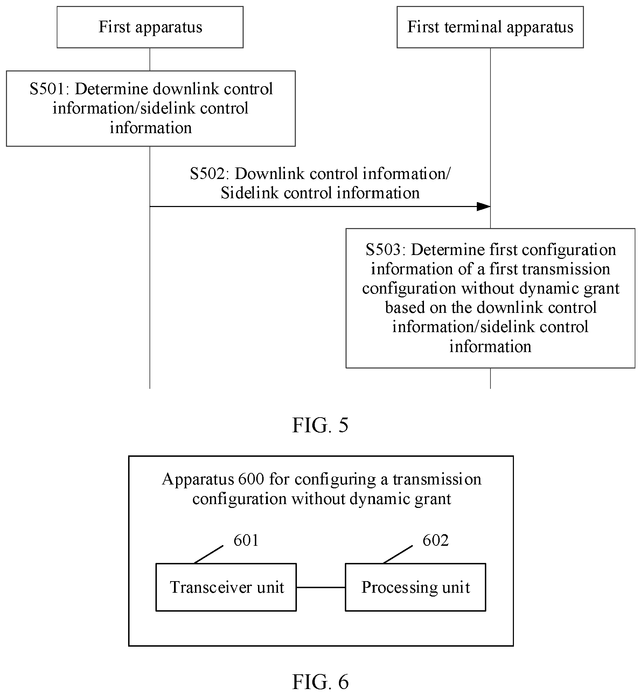

FIG. 5 is a schematic flowchart of a method for configuring a transmission configuration without dynamic grant according to an embodiment of this application. In the embodiment shown in FIG. 5, the method is illustrated by using an example in which a terminal apparatus (denoted as a first terminal apparatus for differentiation) and a first apparatus are used as execution bodes of interaction.

In a possible embodiment, the first apparatus is a network apparatus, and the method may be used in a scenario of air interface link transmission without dynamic grant. For example, the first terminal apparatus may be any terminal device in the terminal devices 420a to 420f in FIG. 4, and the network apparatus may be the network device 410 in FIG. 4.

In another possible embodiment, the first apparatus is another terminal apparatus (denoted as a second terminal apparatus for differentiation), and the method may be used in a scenario of sidelink transmission without dynamic grant. For example, the first terminal apparatus may be the terminal device 420e or the terminal device 420f in FIG. 4, and the second terminal apparatus may be the terminal device 420d in FIG. 4.

As shown in FIG. 5, the method for configuring a transmission configuration without dynamic grant may include but is not limited to the following step S501 to step S503.

S501: The first apparatus determines downlink control information/sidelink control information. The downlink control information/sidelink control information is used for retransmission and is used to configure a first transmission configuration without dynamic grant.

For example, the first apparatus is a network apparatus. Data transmission may be performed between the first terminal apparatus and the network apparatus in a manner of transmission without dynamic grant. For example, the first terminal apparatus sends data to the network apparatus by using a physical uplink shared channel (physical uplink shared channel, PUSCH), and the network apparatus sends data to the first terminal apparatus by using a physical downlink shared channel (physical downlink shared channel, PDSCH).

In a possible implementation, when the network apparatus fails to correctly receive the data sent by the first terminal apparatus by using the PUSCH, the network apparatus may determine downlink control information (downlink control information, DCI), and denotes the DCI as retransmission DCI. The retransmission DCI is used for retransmission, and may specifically indicate the first terminal apparatus to retransmit data. The retransmission DCI may further include information indicating that the retransmission DCI is used to configure the first transmission configuration without dynamic grant, so that the retransmission DCI may also be used to configure the first transmission configuration without dynamic grant. For example, the retransmission DCI may indicate the first terminal apparatus to update configuration information used in the transmission without dynamic grant.

In another possible implementation, when the first terminal apparatus fails to correctly receive the data sent by the network apparatus by using the PDSCH, the network apparatus may determine retransmission DCI. The retransmission DCI is used for retransmission, and may specifically indicate the first terminal apparatus to receive data retransmitted by the network apparatus. The retransmission DCI may further include information indicating that the retransmission DCI is used to configure the first transmission configuration without dynamic grant, so that the retransmission DCI may also be used to configure the first transmission configuration without dynamic grant. For example, the retransmission DCI may indicate the first terminal apparatus to update configuration information used in the transmission without dynamic grant.

It should be noted that, that the retransmission DCI is used to configure the first transmission configuration without dynamic grant may be understood as that the retransmission DCI is used to configure, reconfigure, activate, or reactivate the first transmission configuration without dynamic grant.

For example, the first apparatus is the second terminal apparatus. Data transmission may be performed between the first terminal apparatus and the second terminal apparatus based on a manner of transmission without dynamic grant. For example, the first terminal apparatus sends data to the second terminal apparatus by using a physical sidelink shared channel (physical sidelink shared channel, PSSCH), and the second terminal apparatus sends data to the first terminal apparatus by using the PSSCH.

In a possible implementation, when the second terminal apparatus fails to correctly receive the data sent by the first terminal apparatus by using the PSSCH, the second terminal apparatus may determine sidelink control information (sidelink control information, SCI), and denote the SCI as retransmission SCI. The retransmission SCI is used for retransmission, and may specifically indicate the first terminal apparatus to retransmit data. The retransmission SCI may further include information indicating that the retransmission SCI is used to configure the first transmission configuration without dynamic grant, so that the retransmission SCI may also be used to configure the first transmission configuration without dynamic grant. For example, the retransmission SCI may indicate the first terminal apparatus to update configuration information used in the transmission without dynamic grant.

In another possible implementation, when the first terminal apparatus fails to correctly receive the data sent by the second terminal apparatus by using the PSSCH, the second terminal apparatus may determine retransmission SCI. The retransmission SCI is used for retransmission, and may specifically indicate the first terminal apparatus to receive data retransmitted by the second terminal apparatus. The retransmission SCI may further include information indicating that the retransmission SCI is used to configure the first transmission configuration without dynamic grant, so that the retransmission SCI may also be used to configure the first transmission configuration without dynamic grant. For example, the retransmission SCI may indicate the first terminal apparatus to update configuration information used in the transmission without dynamic grant.

It should be noted that, that the retransmission SCI is used to configure the first transmission configuration without dynamic grant may be understood as that the retransmission SCI is used to configure, reconfigure, activate, or reactivate the first transmission configuration without dynamic grant.

S502: The first apparatus sends the downlink control information/sidelink control information to the first terminal apparatus, and correspondingly, the first terminal apparatus receives the downlink control information/sidelink control information from the first apparatus.

For example, the first apparatus is the network apparatus. The network apparatus sends the retransmission DCI to the first terminal apparatus. After receiving the retransmission DCI, the first terminal apparatus may determine that the retransmission DCI is used for retransmission and is also used to configure the first transmission configuration without dynamic grant.

For example, the first apparatus is the second terminal apparatus. The second terminal apparatus sends the retransmission SCI to the first terminal apparatus. After receiving the retransmission SCI, the first terminal apparatus may determine that the retransmission SCI is used for retransmission and is also used to configure the first transmission configuration without dynamic grant.

S503: The first terminal apparatus determines first configuration information of the first transmission configuration without dynamic grant based on the downlink control information/sidelink control information.

The transmission configuration without dynamic grant may be understood as configured transmission without dynamic grant. There may be one or more sets of transmission configurations without dynamic grant between the first terminal apparatus and the first apparatus, and different transmission configurations without dynamic grant may be used to meet different service requirements. Each set of transmission configuration without dynamic grant may be associated with one or more groups of configuration information. Different configuration information includes different transmission resources and/or transmission parameters, and may be used to meet different transmission performance. The foregoing transmission configuration without dynamic grant and configuration information may be preconfigured by the first apparatus, or may be pre-agreed on by the first apparatus and the first terminal apparatus.

The first transmission configuration without dynamic grant may be understood as a transmission configuration without dynamic grant that needs to be configured (or reconfigured, activated, or reactivated), that is, indicate a set of transmission configuration without dynamic grant that needs to be configured (or reconfigured, activated, or reactivated). For example, when there is only one set of transmission configuration without dynamic grant between the first terminal apparatus and the first apparatus, the first transmission configuration without dynamic grant may be the set of transmission configuration without dynamic grant. When there are a plurality of sets of transmission configurations without dynamic grant between the first terminal apparatus and the first apparatus, the first transmission configuration without dynamic grant may be any one of the plurality of sets of transmission configurations without dynamic grant.

The first configuration information may be understood as configuration information that needs to be used in the first transmission configuration without dynamic grant. For example, when the first transmission configuration without dynamic grant is associated with only one group of configuration information, the first configuration information may be the group of configuration information. When the first transmission configuration without dynamic grant is associated with a plurality of groups of configuration information, the first configuration information may be any one of the plurality of groups of configuration information.

For example, there are two sets of transmission configurations without dynamic grant between the first terminal apparatus and the first apparatus, which are respectively denoted as a transmission configuration A without dynamic grant and a transmission configuration B without dynamic grant. The transmission configuration A without dynamic grant is associated with two sets of configuration information, which are respectively denoted as configuration information al and configuration information a2. The transmission configuration B without dynamic grant is associated with two sets of configuration information, which are respectively denoted as configuration information b1 and configuration information b2. Assuming that the first terminal apparatus and the first apparatus originally use the configuration information a1 of the transmission configuration A without dynamic grant to perform data transmission, the first transmission configuration without dynamic grant may be the transmission configuration A without dynamic grant, and the first configuration information may be the configuration information a2; or the first transmission configuration without dynamic grant may be the transmission configuration B without dynamic grant, and the first configuration information may be the configuration information b1 or b2.

In a possible implementation, the retransmission DCI/SCI sent by the first apparatus to the first terminal apparatus may include indication information indicating the first configuration information of the first transmission configuration without dynamic grant. After receiving the retransmission DCI/SCI, the first terminal apparatus may determine the first configuration information of the first transmission configuration without dynamic grant based on the indication information, and then the first terminal apparatus may perform transmission without dynamic grant with the first apparatus by using the first configuration information of the first transmission configuration without dynamic grant.

In the foregoing embodiment, the first apparatus may add, to the DCI/SCI originally used for retransmission, information indicating that the DCI/SCI is used to configure the first transmission configuration without dynamic grant, so that the DCI/SCI may also be used to configure the first transmission configuration without dynamic grant. Therefore, when the transmission configuration without dynamic grant between the first terminal apparatus and the first apparatus needs to be updated (in other words, configured, reconfigured, activated, or reactivated), the first apparatus may simultaneously update the transmission configuration without dynamic grant by sending the DCI/SCI to the first terminal apparatus, and does not need to update the transmission configuration without dynamic grant by specially sending RRC signaling or activation information to the first terminal apparatus, to reduce overheads. In addition, the DCI/SCI is physical layer (or referred to as L1 layer) signaling, the RRC signaling is higher layer signaling, and a delivery periodicity of the DCI/SCI is shorter than that of the RRC signaling, so that an update speed of the transmission configuration without dynamic grant can be increased. In addition, the first terminal apparatus has natural feedback for the DCI/SCI. Therefore, the first terminal apparatus does not need to specifically confirm the transmission configuration without dynamic grant, to further reduce overheads.

In a possible implementation, the DCI/SCI includes a first indicator field, and a first value of the first indicator field indicates that the DCI/SCI is used for retransmission.

A value of the first indicator field in the DCI/SCI indicates whether the DCI/SCI is used for retransmission. For example, when the value of the first indicator field is the first value, it indicates that the DCI/SCI is used for retransmission; or when the value of the first indicator field is another value other than the first value, it indicates that the DCI/SCI is not used for retransmission.

After receiving the DCI/SCI, the first terminal apparatus may determine, based on the first indicator field in the DCI/SCI, whether the DCI/SCI is used for retransmission. Specifically, when the value of the first indicator field in the DCI/SCI is the first value, the first terminal apparatus may determine that the DCI/SCI is used for retransmission; or when the value of the first indicator field in the DCI/SCI is another value other than the first value, the first terminal apparatus may determine that the DCI/SCI is not used for retransmission.

Optionally, the DCI/SCI may be scrambled by using a specific radio network temporary identifier (radio network temporary identifier, RNTI). When the DCI/SCI is scrambled by using a configured scheduling (configured scheduling, CS) RNTI (denoted as a CS-RNTI), and the value of the first indicator field in the DCI/SCI is the first value, the first terminal apparatus may determine that the DCI/SCI is used for retransmission.

Optionally, the first indicator field is a new data indicator (new data indicator, NDI) field, and a value of the NDI field in the DCI/SCI indicates whether the DCI/SCI is used for retransmission. For example, when the value of the NDI field is 1, it indicates that the DCI/SCI is used for retransmission; or when the value of the NDI field is 0, it indicates that the DCI/SCI is not used for retransmission.

In the foregoing implementation, the first value of the first indicator field in the DCI/SCI indicates that the DCI/SCI is used for retransmission. Therefore, the first terminal apparatus may determine, based on the value of the first indicator field, whether the DCI/SCI is used for retransmission.

In a possible implementation, the DCI/SCI includes a second indicator field, and a second value of the second indicator field indicates that the DCI/SCI is used to configure the first transmission configuration without dynamic grant.

A value of the second indicator field in the DCI/SCI indicates whether the DCI/SCI is used to configure the first transmission configuration without dynamic grant. For example, when the value of the second indicator field is the second value, it indicates that the DCI/SCI is used to configure the first transmission configuration without dynamic grant; or when the value of the second indicator field is another value other than the second value, it indicates that the DCI/SCI is not used to configure the first transmission configuration without dynamic grant.

After receiving the DCI/SCI and determining that the DCI/SCI is used for retransmission, the first terminal apparatus may determine, based on the second indicator field in the DCI/SCI, whether the DCI/SCI is also used to configure the first transmission configuration without dynamic grant. Specifically, when the value of the second indicator field in the DCI/SCI is the second value, the first terminal apparatus may determine that the DCI/SCI is used to configure the first transmission configuration without dynamic grant; or when the value of the second indicator field in the DCI/SCI is another value other than the second value, the first terminal apparatus may determine that the DCI/SCI is not used to configure the first transmission configuration without dynamic grant.

Optionally, the second indicator field is a modulation and coding scheme (modulation and coding scheme, MCS) field, and a value of the MCS field in the DCI/SCI indicates whether the DCI/SCI is used to configure the first transmission configuration without dynamic grant. The value of the MCS field may be values of some bits or all bits in the MCS field.

In a possible implementation, values of some bits in the MCS field, for example, a value of a most significant bit (most significant bit, MSB), indicate whether the DCI/SCI is used to configure the first transmission configuration without dynamic grant. For example, when the value of the MSB in the MCS field is 0, it indicates that the DCI/SCI is used to configure the first transmission configuration without dynamic grant; or when the value of the MSB in the MCS field is 1, it indicates that the DCI/SCI is not used to configure the first transmission configuration without dynamic grant.

In another possible implementation, values of all bits in the MCS field indicate whether the DCI/SCI is used to configure the first transmission configuration without dynamic grant. For example, when the values of all the bits in the MCS field are specific values (for example, the values range from 0 to 27), it indicates that the DCI/SCI is used to configure the first transmission configuration without dynamic grant; or when the values of all the bits in the MCS field are values other than the specific values (for example, the values range from 28 to 31), it indicates that the DCI/SCI is not used to configure the first transmission configuration without dynamic grant.

Optionally, the second indicator field may alternatively be another indicator field, for example, a new data indicator (new data indicator, NDI) field or a redundancy version (redundancy version, RV) field.

In the foregoing implementation, the second value of the second indicator field in the DCI/SCI indicates that the DCI/SCI is used to configure the first transmission configuration without dynamic grant. Therefore, the first terminal apparatus may determine, based on the value of the second indicator field, whether the DCI/SCI is used to configure the first transmission configuration without dynamic grant.

In another possible implementation, the DCI/SCI is scrambled by using an RNTI, where the RNTI indicates whether the DCI/SCI is used to configure the first transmission configuration without dynamic grant. For example, when the RNTI is a specific identifier (for example, an RNTI-1), it indicates that the DCI/SCI is used to configure the first transmission configuration without dynamic grant; or when the RNTI is another identifier other than the specific identifier, it indicates that the DCI/SCI is not used to configure the first transmission configuration without dynamic grant.

After receiving the DCI/SCI and determining that the DCI/SCI is used for retransmission, the first terminal apparatus may determine, based on the RNTI used for scrambling the DCI/SCI, whether the DCI/SCI is also used to configure the first transmission configuration without dynamic grant. Specifically, when the RNTI used for scrambling the DCI/SCI is a specific identifier (for example, the RNTI-1), the first terminal apparatus may determine that the DCI/SCI is used to configure the first transmission configuration without dynamic grant; or when the RNTI used for scrambling the DCI/SCI is another identifier other than the specific identifier, the first terminal apparatus may determine that the DCI/SCI is not used to configure the first transmission configuration without dynamic grant.

In the foregoing implementation, the RNTI used for scrambling the DCI/SCI indicates whether the DCI/SCI is used to configure the first transmission configuration without dynamic grant. Therefore, the first terminal apparatus may determine, based on the RNTI, whether the DCI/SCI is used to configure the first transmission configuration without dynamic grant.

In still another possible implementation, after receiving the DCI/SCI and determining that the DCI/SCI is used for retransmission, the first terminal apparatus may determine, based on a resource used for detecting or receiving the DCI/SCI, whether the DCI/SCI is also used to configure the first transmission configuration without dynamic grant. The resource herein may include a time domain resource and/or a frequency domain resource, for example, a search space (search space, SS) or a control resource set (control resource set, CORESET).

For example, when the first terminal apparatus detects or receives the DCI/SCI on a first time-frequency resource, the first terminal apparatus may determine that the DCI/SCI is used to configure the first transmission configuration without dynamic grant; or when the first terminal apparatus detects or receives the DCI/SCI on another time-frequency resource other than the first time-frequency resource, the first terminal apparatus may determine that the DCI/SCI is not used to configure the first transmission configuration without dynamic grant.

In the foregoing implementation, the first terminal apparatus may determine, based on the resource used for detecting or receiving the DCI/SCI, whether the DCI/SCI is used to configure the first transmission configuration without dynamic grant. Therefore, information specially indicating whether the DCI/SCI is used to configure the first transmission configuration without dynamic grant does not need to be added to the DCI/SCI, to help reduce indication overheads.

In a possible implementation, the DCI/SCI includes a third indicator field, the third indicator field indicates the first configuration information of the first transmission configuration without dynamic grant, and the first configuration information includes at least one transmission resource and/or transmission parameter.

A value of the third indicator field in the DCI/SCI may directly indicate the first configuration information of the first transmission configuration without dynamic grant, or may indirectly indicate the first configuration information of the first transmission configuration without dynamic grant by indicating an index of the first configuration information of the first transmission configuration without dynamic grant. The value of the third indicator field may be values of some bits or all bits in the third indicator field.

For example, the first transmission configuration without dynamic grant may be associated with a plurality of groups of configuration information, each group of configuration information may include a value of at least one transmission resource and/or transmission parameter, and different configuration information may include different values of a transmission resource and/or transmission parameter. The first configuration information may be specifically a group of configuration information in the foregoing plurality of groups of configuration information.

The transmission resource may include but is not limited to a time domain resource, a frequency domain resource, a spatial domain resource, a code domain resource, a demodulation reference signal resource, and the like. The transmission parameter may include but is not limited to a modulation and coding scheme, a repetition number, a repetition type, a redundancy version, a precoding parameter, a power control parameter, and the like.

In a possible implementation, each of the plurality of groups of configuration information has a corresponding index, and a mapping relationship between values of the third indicator field and indexes of the plurality of groups of configuration information may be preconfigured or pre-agreed on, so that the value of the third indicator field may indicate an index of the configuration information, and different values of the third indicator field may indicate indexes of different configuration information, that is, indicate different configuration information.

After receiving the DCI/SCI and determining that the DCI/SCI is used for retransmission and is also used to configure the first transmission configuration without dynamic grant, the first terminal apparatus may determine the first configuration information of the first transmission configuration without dynamic grant based on the third indicator field in the DCI/SCI. Specifically, the first terminal apparatus may determine a corresponding configuration information index based on the value of the third indicator field, and then determine configuration information corresponding to the configuration information index as the first configuration information of the first transmission configuration without dynamic grant.

Optionally, the third indicator field may include any one or more of an MCS field, an NDI field, and an RV field.

In the foregoing implementation, the third indicator field in the DCI/SCI indicates the first configuration information of the first transmission configuration without dynamic grant. Therefore, the first terminal apparatus may determine the first configuration information of the first transmission configuration without dynamic grant based on the third indicator field.

In a possible implementation, the third indicator field includes one indicator field, and the indicator field indicates the first configuration information of the first transmission configuration without dynamic grant, or indicates an index of the first configuration information of the first transmission configuration without dynamic grant.

Optionally, the third indicator field is the MCS field, and values of some bits or all bits in the MCS field indicate the first configuration information of the first transmission configuration without dynamic grant, or indicate an index of the first configuration information of the first transmission configuration without dynamic grant.

For example, the first transmission configuration without dynamic grant is associated with two groups of configuration information. Indexes of the first group of configuration information and the second group of configuration information are respectively a first index (for example, 0) and a second index (for example, 1). A value of one bit in the MCS field may indicate the indexes of the two groups of configuration information. For example, when the value of the bit is 0, the first index is indicated, to indicate the first group of configuration information, that is, the indicated first configuration information is the first group of configuration information; or when the value of the bit is 1, the second index is indicated, to indicate the second group of configuration information, that is, the indicated first configuration information is the second group of configuration information.

Optionally, each group of configuration information may be specifically a value of one transmission resource or transmission parameter, that is, only one transmission resource or transmission parameter is configured. For example, each group of configuration information is a value of one transmission parameter, and the transmission parameter is an MCS level. The first group of configuration information indicates that the MCS level is 14, and the second group of configuration information indicates that the MCS level is 10.

Optionally, each group of configuration information may be specifically values of a plurality of transmission resources and/or transmission parameters, that is, a plurality of transmission resources and/or transmission parameters may be configured. For example, each group of configuration information is a combination of values of two transmission parameters, and the two transmission parameters are an MCS level and a repetition number (repetition number). The first group of configuration information is a first value combination {MCS: 14; repetition number: 2}, indicating that the MCS level is 14 and the repetition number is 2. The second group of configuration information is a second value combination {MCS: 10; repetition number: 4}, indicating that the MCS level is 10 and the repetition number is 4.

In the foregoing implementation, one indicator field in the DCI/SCI indicates the first configuration information of the first transmission configuration without dynamic grant, that is, one indicator field may indicate all transmission resources and/or transmission parameters in the first configuration information, to reduce indication overheads. The first terminal apparatus may determine all transmission resources and/or transmission parameters in the first configuration information at a time based on the indicator field, to help improve efficiency of obtaining the first configuration information.

In a possible implementation, the third indicator field includes a plurality of indicator fields, each of the plurality of indicator fields indicates a corresponding transmission resource and/or transmission parameter, and the corresponding transmission resource and/or transmission parameter is included in the first configuration information of the first transmission configuration without dynamic grant.

For example, the first configuration information of the first transmission configuration without dynamic grant includes at least one transmission resource and/or transmission parameter, the third indicator field may include an indicator field corresponding to each transmission resource and/or transmission parameter in the at least one transmission resource and/or transmission parameter, and the indicator field corresponding to each transmission resource and/or transmission parameter indicates the transmission resource and/or the transmission parameter.

For example, the first configuration information of the first transmission configuration without dynamic grant includes one transmission resource and one transmission parameter, the transmission resource is a time domain resource, and the transmission parameter is an MCS. In this case, the third indicator field may include a time domain resource allocation (time domain resource allocation, TDRA) field indicating the time domain resource and an MCS field indicating the MCS.

The MCS field is used as an example. In a possible implementation, values of some bits in the MCS field indicate MCS values. Specifically, for the first transmission configuration without dynamic grant, a plurality of MCS values and a mapping relationship between values of some bits in the MCS field and the plurality of MCS values may be preconfigured or pre-agreed on, so that the values of the some bits in the MCS field may indicate the MCS values, and different values of the some bits in the MCS field may indicate different MCS values.

For example, for the first transmission configuration without dynamic grant, two MCS values (for example, 0 and 1) are preconfigured or pre-agreed on, and a value of one bit in the MCS field may indicate the two MCS values. For example, when the value of the bit is 0, it indicates that the value of the MCS is 0, or when the value of the bit is 1, it indicates that the value of the MCS is 1.

In another possible implementation, values of some bits in the MCS field indicate indexes of MCS values. Specifically, for the first transmission configuration without dynamic grant, a plurality of MCS values may be preconfigured or pre-agreed on, each MCS value has a corresponding index, and a mapping relationship between values of some bits in the MCS field and indexes of the plurality of MCS values is preconfigured or pre-agreed on, so that the values of the some bits in the MCS field may indicate the indexes of MCS values, and different values of the some bits in the MCS field may indicate indexes of different MCS values, that is, indicate different MCS values.

For example, for the first transmission configuration without dynamic grant, two MCS values (for example, 10 and 14) are preconfigured or pre-agreed on, and indexes of the two MCS values are a first index (for example, 0) and a second index (for example, 1). A value of one bit in the MCS field may indicate the indexes of the two MCS values. For example, when the value of the bit is 0, the first index is indicated, that is, it indicates that the MCS value is 10; or when the value of the bit is 1, the second index is indicated, that is, it indicates that the MCS value is 14.

In still another possible implementation, values of some bits in the MCS field indicate MCS value adjustment information, and the MCS value adjustment information is adjustment information of a current MCS value relative to a previous MCS value. Specifically, a plurality of pieces of MCS value adjustment information and a mapping relationship between values of some bits in the MCS field and the plurality of pieces of MCS value adjustment information may be preconfigured or pre-agreed on, so that the values of the some bits in the MCS field may indicate the MCS value adjustment information, and different values of the some bits in the MCS field may indicate different MCS value adjustment information.

For example, three types of MCS value adjustment information (for example, no adjustment, upward adjustment, and downward adjustment) are preconfigured or pre-agreed on, and values of two bits in the MCS field may indicate the three types of MCS value adjustment information. For example, when the values of the two bits are 00, it indicates no adjustment; when the values of the two bits are 01, it indicates upward adjustment; or when the values of the two bits are 10, it indicates downward adjustment.

In addition, an adjustment granularity of the MCS value may be further preconfigured or pre-agreed on. The adjustment granularity may be but is not limited to one level, two levels, or the like. Assuming that the adjustment granularity of the MCS value is one level, and the previous MCS value is 5, when the values of the two bits in the MCS field are 00, it indicates that the current MCS value is the same as the previous MCS value, that is, it indicates that the current MCS value is 5; when the values of the two bits in the MCS field are 01, it indicates that the current MCS value is adjusted upward by one level based on the previous MCS value, that is, it indicates that the current MCS value is 6; or when the values of the two bits in the MCS field are 10, it indicates that the current MCS value is adjusted downward by one level based on the previous MCS value, that is, it indicates that the current MCS value is 4.

In the foregoing implementation, the first configuration information of the first transmission configuration without dynamic grant is indicated by using a plurality of indicator fields that are in the DCI/SCI and that correspond to the transmission resource and/or the transmission parameter, so that the transmission resource and/or the transmission parameter in the first configuration information can be separately indicated. This has good flexibility, and helps meet a requirement for diversified configuration information.

In a possible implementation, the DCI/SCI includes a fourth indicator field, the fourth indicator field indicates the first transmission configuration without dynamic grant, the fourth indicator field corresponds to a plurality of transmission configurations without dynamic grant, and the first transmission configuration without dynamic grant is included in the plurality of transmission configurations without dynamic grant.

Optionally, when there are a plurality of (sets of) transmission configurations without dynamic grant, each transmission configuration without dynamic grant has a corresponding index, and the fourth indicator field indicates the index of the transmission configuration without dynamic grant. Specifically, a mapping relationship between information in the fourth indicator field and the indexes of the plurality of transmission configurations without dynamic grant may be preconfigured or pre-agreed on, so that the information in the fourth indicator field may indicate the indexes of the transmission configurations without dynamic grant. Different information in the fourth indicator field may indicate indexes of different transmission configurations without dynamic grant, that is, indicate different transmission configurations without dynamic grant.

After receiving the DCI/SCI and determining that the DCI/SCI is used for retransmission and is also used to configure the first transmission configuration without dynamic grant, the first terminal apparatus may determine the first transmission configuration without dynamic grant based on the fourth indicator field in the DCI/SCI. Specifically, the first terminal apparatus may determine a corresponding index of a transmission configuration without dynamic grant based on the information in the fourth indicator field, and then determine the transmission configuration without dynamic grant corresponding to the index of the transmission configuration without dynamic grant as the first transmission configuration without dynamic grant.

Optionally, the fourth indicator field is a hybrid automatic repeat request (hybrid automatic repeat request, HARQ) process field, and a HARQ process ID indicated by the HARQ process field indicates an index of the first transmission configuration without dynamic grant, so as to indicate the first transmission configuration without dynamic grant.

For example, assuming that there are two transmission configurations without dynamic grant, where indexes of the transmission configurations are respectively 0 and 1, HARQ process IDs indicated by the HARQ process field may indicate the indexes of the two transmission configurations without dynamic grant. Specifically, an association relationship between HARQ process IDs indicated by the HARQ process field and the indexes of the two transmission configurations without dynamic grants may be preconfigured or pre-agreed on. For example, the transmission configuration without dynamic grant whose index is 0 is associated with a HARQ process ID 2, and the transmission configuration without dynamic grant whose index is 1 is associated with a HARQ process ID 3. In this case, when the HARQ process field indicates the HARQ process ID 2, it is determined that the first transmission configuration without dynamic grant is the transmission configuration without dynamic grant whose index is 0, or when the HARQ process field indicates the HARQ process ID3, it is determined that the first transmission configuration without dynamic grant is the transmission configuration without dynamic grant whose index is 1.

In the foregoing implementation, when there are a plurality of transmission configurations without dynamic grant, the fourth indicator field in the DCI/SCI indicates the first transmission configuration without dynamic grant. Therefore, the terminal apparatus may determine, based on the fourth indicator field, which one of the plurality of transmission configurations without dynamic grant needs to be configured.

In a possible implementation, the DCI/SCI includes a fifth indicator field, and the fifth indicator field indicates a modulation order of current retransmission.

Optionally, a plurality of modulation orders and a mapping relationship between values of the fifth indicator field and the plurality of modulation orders may be preconfigured or pre-agreed on, so that a value of the fifth indicator field may indicate a modulation order, and different values of the fifth indicator field may indicate different modulation orders.

After receiving the DCI/SCI and determining that the DCI/SCI is used for retransmission, the first terminal apparatus may determine the modulation order of the current retransmission based on the fifth indicator field in the DCI/SCI. Specifically, the modulation order indicated by the value of the fifth indicator field may be determined as the modulation order of the current retransmission.

Optionally, the fifth indicator field is an MCS field, and the value of the fifth indicator field may be values of some bits or all bits in the MCS field. In other words, the values of the some bits or all bits in the MCS field may indicate the modulation order of the current retransmission.

In a possible implementation, values of some bits in the MCS field, for example, a value of at least one least significant bit (least significant bit, LSB), indicate the modulation order of the current retransmission.

For example, for retransmission, four modulation orders are preconfigured or pre-agreed on, which are respectively, for example, binary phase shift keying (binary phase shift keying, BPSK), quadrature phase shift keying (quadrature phase shift keying, QPSK), 16 quadrature amplitude modulation (16 quadrature amplitude modulation, 16 QAM), and 64 quadrature amplitude modulation (64 quadrature amplitude modulation, 64 QAM). Values of two LSBs in the MCS field may indicate the four modulation orders. For example, when the values of the two LSBs in the MCS field are 00, BPSK is indicated; when the values of the two LSBs in the MCS field are 01, QPSK is indicated; when the values of the two LSBs in the MCS field are 10, 16 QAM is indicated; or when the values of the two LSBs in the MCS field are 11, 64 QAM is indicated.

In another possible implementation, values of all bits in the MCS field indicate the modulation order of the current retransmission.

For example, for retransmission, four modulation orders (for example, BPSK, QPSK, 16 QAM, and 64 QAM) are preconfigured or pre-agreed on, and values of all bits in the MCS field may indicate the four modulation orders. For example, when the values of all bits in the MCS field are 0 to 6, BPSK is indicated; when the values of all bits in the MCS field are 7 to 13, QPSK is indicated; when the values of all bits in the MCS field are 14 to 20, 16 QAM is indicated; or when the values of all bits in the MCS field are 21 to 27, 64 QAM is indicated.

In the foregoing implementation, the fifth indicator field in the DCI/SCI indicates the modulation order of the current retransmission. Therefore, the first terminal apparatus may determine, based on the value of the fifth indicator field, the modulation order to be used for the current retransmission.

In a possible implementation, the fifth indicator field indicates adjustment information of the modulation order of the current retransmission relative to a modulation order of initial transmission or previous retransmission.

For example, when the first apparatus fails to correctly receive data (for example, denoted as first data) sent by the first terminal apparatus for an N^{th} time, the first apparatus may indicate the first terminal apparatus to retransmit the first data, where N is a positive integer. In this example, the current retransmission is a process in which the first terminal apparatus sends the first data for an (N+1)^{th} time, and initial transmission is a process in which the first terminal apparatus sends the first data for the first time. It may be understood that when N is greater than 1, the previous retransmission is a process in which the first terminal apparatus sends the first data for the N^{th} time; or when N is equal to 1, there is no previous retransmission. A transmission mode without dynamic grant is used for the initial transmission, and a transmission mode without dynamic grant or a transmission mode with dynamic grant may be used for the previous retransmission.

Optionally, a plurality of pieces of modulation order adjustment information and a mapping relationship between values of the fifth indicator field and the plurality of pieces of modulation order adjustment information may be preconfigured or pre-agreed on. The modulation order adjustment information is adjustment information of the modulation order of the current retransmission relative to the modulation order of the initial transmission or the previous retransmission. Therefore, the value of the fifth indicator field may indicate the modulation order adjustment information, and different values of the fifth indicator field may indicate different modulation order adjustment information.

After receiving the DCI/SCI and determining that the DCI/SCI is used for retransmission, the first terminal apparatus may determine target modulation order adjustment information based on the fifth indicator field in the DCI/SCI. Specifically, the modulation order adjustment information indicated by the value of the fifth indicator field may be determined as the target modulation order adjustment information, and then the modulation order of the current retransmission may be determined based on the target modulation order adjustment information and the modulation order of the initial transmission or the previous retransmission.

Optionally, the fifth indicator field is an MCS field, and the value of the fifth indicator field may be values of some bits or all bits in the MCS field. In other words, the values of the some bits or all bits in the MCS field may indicate the modulation order adjustment information.

In a possible implementation, values of some bits in the MCS field, for example, a value of at least one least significant bit (least significant bit, LSB), indicate the modulation order adjustment information.

For example, for retransmission, three types of modulation order adjustment information (for example, no adjustment, upward adjustment, and downward adjustment) are preconfigured or pre-agreed on, and values of two LSBs in the MCS field may indicate the three types of modulation order adjustment information. For example, when the values of the two LSBs in the MCS field are 00, it indicates no adjustment; when the values of the two LSBs in the MCS field are 01, it indicates upward adjustment; or when the values of the two LSBs in the MCS field are 10, it indicates downward adjustment.

In addition, an adjustment granularity of the modulation order may be further preconfigured or pre-agreed on. The adjustment granularity may be but is not limited to one level, two levels, or the like. For example, levels of BPSK, QPSK, 16 QAM, and 64 QAM increase sequentially, that is, QPSK is one level higher than BPSK, 16 QAM is one level higher than QPSK, and 64 QAM is one level higher than 16 QAM.

Assuming that the adjustment granularity of the modulation order is one level, and the modulation order of the initial transmission or the previous retransmission is QPSK, when the values of the two LSBs in the MCS field are 00, it indicates that the modulation order of the current retransmission is the same as the modulation order of the initial transmission or the previous retransmission, that is, it indicates that the modulation order of the current retransmission is QPSK; when the values of the two LSBs in the MCS field are 01, it indicates that the modulation order of the current retransmission is adjusted upward by one level based on the modulation order of the initial transmission or the previous retransmission, that is, it indicates that the modulation order of the current retransmission is 16 QAM; or when the values of the two bits in the MCS field are 10, it indicates that the current MCS value is adjusted downward by one level based on the previous MCS value, that is, it indicates that the modulation order of the current retransmission is BPSK.

In the foregoing implementation, the fifth indicator field in the DCI/SCI indicates the adjustment information of the modulation order of the current retransmission relative to the modulation order of the initial transmission or the previous retransmission. Therefore, the first terminal apparatus may determine, based on the value of the fifth indicator field, the adjustment information of the modulation order of the current retransmission relative to the modulation order of the initial transmission or the previous retransmission, and then determine the modulation order to be used for the current retransmission.

The following is described by using an example in which this embodiment of this application is applied to a scenario of an uplink Type 1 configured grant (Type 1 configured grant, Type 1 CG).

The network apparatus may deliver configured grant configuration information (configured grant configuration) to the first terminal apparatus by using RRC signaling in the following two manners:
Manner 1: The grant configuration information includes a first part of indication information and a second part of indication information.

The first part of indication information indicates default or initial configuration of each transmission resource and transmission parameter. After receiving the grant configuration information, the first terminal apparatus may determine, based on the first part of indication information, a transmission resource and a transmission parameter that need to be used for transmission without dynamic grant, and perform transmission without dynamic grant based on the determined transmission resource and the determined transmission parameter.

The second part of indication information indicates a plurality of pieces of configuration of one transmission resource or transmission parameter that may be configured by using retransmission DCI, or a plurality of configuration combinations of a plurality of transmission resources and/or transmission parameters. For example, the second part of indication information may indicate the following two transmission parameters, that is, four configuration combinations of an MCS and a repetition number (repetition number): {MCS: 13; repetition number: 1}, {MCS: 14; repetition number: 2}, {MCS: 15; repetition number: 4}, and {MCS: 16; repetition number: 8}.

Manner 2: The grant configuration information is used to configure a plurality of values for a transmission resource or a transmission resource that may be configured by using retransmission DCI, where one value (for example, the first value) is a default value or an initial value. For example, four values: {13, 14, 15, 16} are configured for the MCS, where 13 is the default value or the initial value. After receiving the grant configuration information, the first terminal apparatus may determine, based on the default value or the initial value configured in the grant configuration information, a transmission resource and a transmission parameter that need to be used for transmission without dynamic grant, and perform transmission without dynamic grant based on the determined transmission resource and the determined transmission parameter.

After receiving the retransmission DCI, the first terminal apparatus may determine, based on values of some bits (for example, the last two LSBs) in the MCS field, a modulation order used for retransmission. Whether the retransmission DCI is used to configure the first transmission configuration without dynamic grant may be determined based on values of some bits (for example, an MSB) in the MCS field. If the retransmission DCI is used to configure the first transmission configuration without dynamic grant, the first configuration information of the first transmission configuration without dynamic grant is further determined based on values of remaining bits (for example, bits other than the MSB and the last two LSBs) in the MCS field.

For example, in an NR system, an MCS field of DCI includes five bits, where a value of one MSB indicates whether the DCI is used to configure the first transmission configuration without dynamic grant, values of two LSBs indicate the modulation order for retransmission, and values of remaining two bits indicate the first configuration information of the first transmission configuration without dynamic grant. With reference to Manner 1, the values of the remaining two bits indicate one of the plurality of configurations or one of the plurality of configuration combinations; and with reference to Manner 2, the values of the remaining two bits indicate one of the plurality of values.

In the foregoing description, that the retransmission DCI is used to configure the first transmission configuration without dynamic grant may be understood as that the retransmission DCI is used to configure, reconfigure, activate, or reactivate the first transmission configuration without dynamic grant.

In addition, a method for determining, by the first terminal apparatus, that the DCI is used for retransmission (that is, determining that the DCI is the retransmission DCI) may be as follows: When the DCI is scrambled by using a specific RNTI, and a specific field in the DCI is set to a specific value, the first terminal apparatus determines that the DCI is used for retransmission.

For example, after the first terminal apparatus receives the DCI, a method for determining whether the DCI is used for retransmission and used to configure the first transmission configuration without dynamic grant may be shown in Table 1:

**Table 1**

| DCI scrambled by CS-RNTI | Activate or deactivate | Retransmission | Retransmission and configuration of first transmission configuration without dynamic grant |
|---|---|---|---|
| Field settings | NDI=0 | NDI=1 | NDI=1 |
| | | MSB of MCS=1 | MSB of MCS=0 |

When the DCI is scrambled by using the CS-RNTI, and a value of the NDI field in the DCI is 0, the first terminal apparatus determines that the DCI is used to activate or deactivate the transmission configuration without dynamic grant. When the DCI is scrambled by using the CS-RNTI, and a value of the NDI field in the DCI is 1, the first terminal apparatus determines that the DCI is used for retransmission. On the basis that the DCI is scrambled by using the CS-RNTI and the value of the NDI field in the DCI is 1, if a value of the MSB of the MCS field in the DCI is 1, the first terminal apparatus determines that the DCI is used for retransmission but is not used for configuring (or reconfiguring, activating, or reactivating) the first transmission configuration without dynamic grant. On the basis that the DCI is scrambled by using the CS-RNTI and the value of the NDI field in the DCI is 1, if a value of the MSB of the MCS field in the DCI is 0, the first terminal apparatus determines that the DCI is used for retransmission but is not used for configuring (or reconfiguring, activating, or reactivating) the first transmission configuration without dynamic grant.

The foregoing describes in detail the method in embodiments of this application. The following describes an apparatus embodiment in embodiments of this application.

FIG. 6 is a diagram of a structure of an apparatus for configuring a transmission configuration without dynamic grant according to an embodiment of this application.

As shown in FIG. 6, the apparatus 600 for configuring a transmission configuration without dynamic grant may include a transceiver unit 601 and a processing unit 602. The transceiver unit 601 and the processing unit 602 may be software, hardware, or a combination of software and hardware.

The transceiver unit 601 may implement a sending function and/or a receiving function, and the transceiver unit 601 may also be described as a communication unit. The transceiver unit 601 may alternatively be a unit integrating an obtaining unit and a sending unit. The obtaining unit is configured to implement a receiving function, and the sending unit is configured to implement a sending function. Optionally, the transceiver unit 601 may be configured to receive information sent by another apparatus, and may be further configured to send information to another apparatus.

In a possible design, the apparatus 600 for configuring a transmission configuration without dynamic grant may correspond to the first terminal apparatus in the foregoing method embodiment. For example, the apparatus 600 for configuring a transmission configuration without dynamic grant may be the first terminal apparatus in the method embodiment shown in FIG. 5, or may be a chip in the first terminal apparatus. The apparatus 600 for configuring a transmission configuration without dynamic grant may include units configured to perform the operations performed by the first terminal apparatus in the foregoing method embodiment. In addition, the units in the apparatus 600 for configuring a transmission configuration without dynamic grant are separately configured to implement the operations performed by the first terminal apparatus in the foregoing method embodiment. The units are described as follows.

The transceiver unit 601 is configured to receive downlink control information/sidelink control information sent by a first apparatus, where the downlink control information/sidelink control information is used for retransmission and is used to configure a first transmission configuration without dynamic grant; and
the processing unit 602 is configured to determine first configuration information of the first transmission configuration without dynamic grant based on the downlink control information/sidelink control information.

In a possible implementation, the downlink control information/sidelink control information includes a first indicator field, and a first value of the first indicator field indicates that the downlink control information/sidelink control information is used for retransmission.

In a possible implementation, the downlink control information/sidelink control information includes a second indicator field, and a second value of the second indicator field indicates that the downlink control information/sidelink control information is used to configure the first transmission configuration without dynamic grant.

In a possible implementation, the downlink control information/sidelink control information includes a third indicator field, the third indicator field indicates the first configuration information of the first transmission configuration without dynamic grant, and the first configuration information includes at least one transmission resource and/or transmission parameter.

In a possible implementation, the third indicator field includes one indicator field, and the indicator field indicates the first configuration information; or the third indicator field includes a plurality of indicator fields, and each of the plurality of indicator fields indicates a corresponding transmission resource and/or transmission parameter.

In a possible implementation, the downlink control information/sidelink control information includes a fourth indicator field, the fourth indicator field indicates the first transmission configuration without dynamic grant, the fourth indicator field corresponds to a plurality of transmission configurations without dynamic grant, and the first transmission configuration without dynamic grant is included in the plurality of transmission configurations without dynamic grant.

In a possible implementation, the downlink control information/sidelink control information includes a fifth indicator field, and the fifth indicator field indicates a modulation order of current retransmission, or adjustment information of the modulation order of the current retransmission relative to a modulation order of initial transmission or previous retransmission.

In a possible implementation, the second indicator field, the third indicator field, or the fifth indicator field is a modulation and coding scheme MCS field.

In another possible design, the apparatus 600 for configuring a transmission configuration without dynamic grant may correspond to the first apparatus (network apparatus/second terminal apparatus) in the foregoing method embodiment. For example, the apparatus 600 for configuring a transmission configuration without dynamic grant may be the first apparatus in the method embodiment shown in FIG. 5, or may be a chip in the first apparatus. The apparatus 600 for configuring a transmission configuration without dynamic grant may include units configured to perform the operations performed by the first apparatus in the foregoing method embodiment. In addition, the units in the apparatus 600 for configuring a transmission configuration without dynamic grant are separately configured to implement the operations performed by the first apparatus in the foregoing method embodiment. The units are described as follows.

The processing unit 602 is configured to determine downlink control information/sidelink control information, where the downlink control information/sidelink control information is used for retransmission and is used to configure a first transmission configuration without dynamic grant; and
the transceiver unit 601 is configured to send the downlink control information/sidelink control information to a terminal apparatus.

In a possible implementation, the downlink control information/sidelink control information includes a first indicator field, and a first value of the first indicator field indicates that the downlink control information/sidelink control information is used for retransmission.

In a possible implementation, the downlink control information/sidelink control information includes a second indicator field, and a second value of the second indicator field indicates that the downlink control information/sidelink control information is used to configure the first transmission configuration without dynamic grant.

In a possible implementation, the downlink control information/sidelink control information includes a third indicator field, the third indicator field indicates first configuration information of the first transmission configuration without dynamic grant, and the first configuration information includes at least one transmission resource and/or transmission parameter.

In a possible implementation, the third indicator field includes one indicator field, and the indicator field indicates the first configuration information; or the third indicator field includes a plurality of indicator fields, and each of the plurality of indicator fields indicates a corresponding transmission resource and/or transmission parameter.

In a possible implementation, the downlink control information/sidelink control information includes a fourth indicator field, the fourth indicator field indicates the first transmission configuration without dynamic grant, the fourth indicator field corresponds to a plurality of transmission configurations without dynamic grant, and the first transmission configuration without dynamic grant is included in the plurality of transmission configurations without dynamic grant.

In a possible implementation, the downlink control information/sidelink control information includes a fifth indicator field, and the fifth indicator field indicates a modulation order of current retransmission, or adjustment information of the modulation order of the current retransmission relative to a modulation order of initial transmission or previous retransmission.

In a possible implementation, the second indicator field, the third indicator field, or the fifth indicator field is a modulation and coding scheme MCS field.

Based on this embodiment of this application, the units in the apparatus shown in FIG. 6 may be separately or all combined into one or more other units, or one (or more) of the units may be further divided into a plurality of smaller functional units. In this way, same operations can be implemented without affecting implementation of technical effects of this embodiment of this application. The foregoing units are obtained through division based on logical functions. During actual application, a function of one unit may be implemented by a plurality of units, or functions of a plurality of units are implemented by one unit. In another embodiment of this application, an electronic device may further include another unit. During actual application, the functions may alternatively be implemented with assistance of the another unit, and may be implemented by a plurality of units in collaboration.

It should be noted that, for implementations of the units, refer to corresponding descriptions of the corresponding method embodiment.

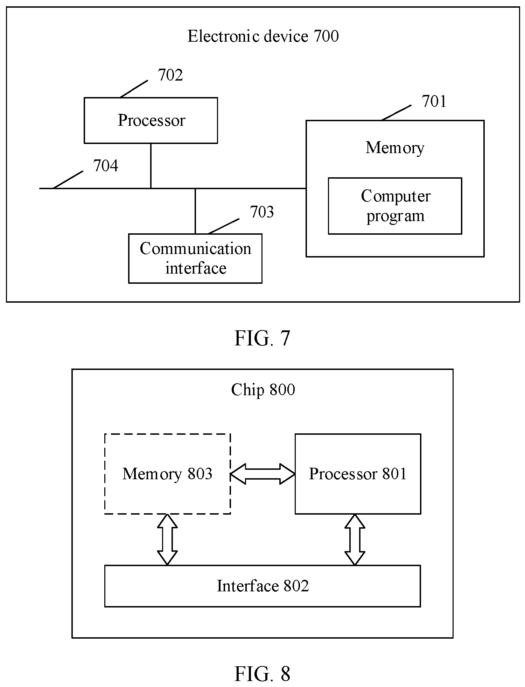

FIG. 7 is a diagram of a structure of an electronic device according to an embodiment of this application. The electronic device 700 may include a memory 701 and a processor 702. Further, optionally, the electronic device 700 may further include a communication interface 703 and a bus 704. A communication connection among the memory 701, the processor 702, and the communication interface 703 is implemented through the bus 704. The communication interface 703 is configured to exchange data with another device.

The memory 701 is configured to provide storage space, and the storage space may store data such as an operating system and a computer program. The memory 701 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

The processor 702 is a module that performs an arithmetic operation and a logical operation, and may be one or a combination of processing modules such as a central processing unit (central processing unit, CPU), a graphics processing unit (graphics processing unit, GPU), or a microprocessor unit (microprocessor unit, MPU). The processor 702 may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

In a possible design, the electronic device 700 may correspond to the first terminal apparatus in the foregoing method embodiment. For example, the electronic device 700 may be the first terminal apparatus in the foregoing method embodiment, or may be a chip in the first terminal apparatus. The electronic device 700 may include components configured to perform the operations performed by the first terminal apparatus in the foregoing method embodiment. In addition, to separately implement, by the components in the electronic device 700, the operations performed by the first terminal apparatus in the foregoing method embodiment, the processor 702 invokes the computer program stored in the memory 701, to perform the method shown in the foregoing method embodiment.

In another possible design, the electronic device 700 may correspond to the first apparatus in the foregoing method embodiment. For example, the electronic device 700 may be the first apparatus in the foregoing method embodiment, or may be a chip in the first apparatus. The electronic device 700 may include components configured to perform the operations performed by the first apparatus in the foregoing method embodiment. In addition, to separately implement, by the components in the electronic device 700, the operations performed by the first apparatus in the foregoing method embodiment, the processor 702 invokes the computer program stored in the memory 701, to perform the method shown in the foregoing method embodiment.

For a case in which the electronic device may be a chip or a chip system, refer to a diagram of a structure of a chip shown in FIG. 8.

As shown in FIG. 8, the chip 800 includes a processor 801 and an interface 802. There may be one or more processors 801, and there may be a plurality of interfaces 802. It should be noted that a function corresponding to each of the processor 801 and the interface 802 may be implemented by using a hardware design, or may be implemented by using a software design, or may be implemented by combining software and hardware. This is not limited herein.

Optionally, the chip 800 may further include a memory 803, and the memory 803 is configured to store necessary program instructions and data.

In this application, the processor 801 may be configured to: invoke, from the memory 803, a program for implementing, in the electronic device, a method for configuring a transmission configuration without dynamic grant provided in one or more embodiments of this application, and execute an instruction included in the program. The interface 802 may be configured to output an execution result of the processor 801. In this application, the interface 802 may be specifically configured to output messages or information about the processor 801.

For the method for configuring a transmission configuration without dynamic grant provided in one or more embodiments of this application, refer to the foregoing method embodiments. Details are not described herein again.

Based on the method provided in embodiments of this application, an embodiment of this application further provides a computer-readable storage medium. The computer-readable storage medium stores a computer program or instructions. When the computer program or the instructions are run on a processor, the method shown in the foregoing method embodiment may be implemented.

Based on the method provided in embodiments of this application, an embodiment of this application further provides a computer program product. The computer program product includes a computer program or instructions. When the computer program or the instructions are run on a processor, the method shown in the foregoing method embodiment may be implemented.

Based on the method provided in embodiments of this application, an embodiment of this application further provides a system. The system includes at least one of the apparatus 600 for configuring a transmission configuration without dynamic grant, the electronic device 700, or the chip 800.

Based on the method provided in embodiments of this application, an embodiment of this application further provides a system. The system includes a terminal apparatus and a first apparatus. The terminal apparatus is configured to perform the steps performed by the first terminal apparatus in the foregoing method embodiment, and the first apparatus is configured to perform the steps performed by the first apparatus in the foregoing method embodiment.

It should be understood that the memory in embodiments of this application may be a volatile memory or a nonvolatile memory, or may include both a volatile memory and a nonvolatile memory. The non-volatile memory may be a hard disk drive (hard disk drive, HDD), a solid-state drive (solid-state drive, SSD), a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory described in this specification aims to include but is not limited to these memories and any memory of another proper type.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

A person of ordinary skill in the art may be aware that units and algorithm steps in the examples described with reference to embodiments provided in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the above-described apparatus embodiment is merely an example. For example, the division of the units is only a logical function division and may be other divisions during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes various media that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A method for configuring a transmission configuration without dynamic grant, comprising:
receiving downlink control information/sidelink control information sent by a first apparatus, wherein the downlink control information/sidelink control information is used for retransmission and is used to configure a first transmission configuration without dynamic grant; and
determining first configuration information of the first transmission configuration without dynamic grant based on the downlink control information/sidelink control information.

2. The method according to claim 1, wherein the downlink control information/sidelink control information comprises a first indicator field, and a first value of the first indicator field indicates that the downlink control information/sidelink control information is used for retransmission.

3. The method according to claim 1 or 2, wherein the downlink control information/sidelink control information comprises a second indicator field, and a second value of the second indicator field indicates that the downlink control information/sidelink control information is used to configure the first transmission configuration without dynamic grant.

4. The method according to any one of claims 1 to 3, wherein the downlink control information/sidelink control information comprises a third indicator field, the third indicator field indicates the first configuration information of the first transmission configuration without dynamic grant, and the first configuration information comprises at least one transmission resource and/or transmission parameter.

5. The method according to claim 4, wherein the third indicator field comprises one indicator field, and the indicator field indicates the first configuration information; or
the third indicator field comprises a plurality of indicator fields, and each of the plurality of indicator fields indicates a corresponding transmission resource and/or transmission parameter.

6. The method according to any one of claims 1 to 5, wherein the downlink control information/sidelink control information comprises a fourth indicator field, the fourth indicator field indicates the first transmission configuration without dynamic grant, the fourth indicator field corresponds to a plurality of transmission configurations without dynamic grant, and the first transmission configuration without dynamic grant is comprised in the plurality of transmission configurations without dynamic grant.

7. The method according to any one of claims 1 to 6, wherein the downlink control information/sidelink control information comprises a fifth indicator field, and the fifth indicator field indicates a modulation order of current retransmission, or adjustment information of the modulation order of the current retransmission relative to a modulation order of initial transmission or previous retransmission.

8. The method according to any one of claims 3, 4, and 7, wherein the second indicator field, the third indicator field, or the fifth indicator field is a modulation and coding scheme MCS field.

9. A method for configuring a transmission configuration without dynamic grant, comprising:
determining downlink control information/sidelink control information, wherein the downlink control information/sidelink control information is used for retransmission and is used to configure a first transmission configuration without dynamic grant; and
sending the downlink control information/sidelink control information to a terminal apparatus.

10. The method according to claim 9, wherein the downlink control information/sidelink control information comprises a first indicator field, and a first value of the first indicator field indicates that the downlink control information/sidelink control information is used for retransmission.

11. The method according to claim 9 or 10, wherein the downlink control information/sidelink control information comprises a second indicator field, and a second value of the second indicator field indicates that the downlink control information/sidelink control information is used to configure the first transmission configuration without dynamic grant.

12. The method according to any one of claims 9 to 11, wherein the downlink control information/sidelink control information comprises a third indicator field, the third indicator field indicates first configuration information of the first transmission configuration without dynamic grant, and the first configuration information comprises at least one transmission resource and/or transmission parameter.

13. The method according to claim 12, wherein the third indicator field comprises one indicator field, and the indicator field indicates the first configuration information; or
the third indicator field comprises a plurality of indicator fields, and each of the plurality of indicator fields indicates a corresponding transmission resource and/or transmission parameter.

14. The method according to any one of claims 9 to 13, wherein the downlink control information/sidelink control information comprises a fourth indicator field, the fourth indicator field indicates the first transmission configuration without dynamic grant, the fourth indicator field corresponds to a plurality of transmission configurations without dynamic grant, and the first transmission configuration without dynamic grant is comprised in the plurality of transmission configurations without dynamic grant.

15. The method according to any one of claims 9 to 14, wherein the downlink control information/sidelink control information comprises a fifth indicator field, and the fifth indicator field indicates a modulation order of current retransmission, or adjustment information of the modulation order of the current retransmission relative to a modulation order of initial transmission or previous retransmission.

16. The method according to any one of claims 11, 12, and 15, wherein the second indicator field, the third indicator field, or the fifth indicator field is a modulation and coding scheme MCS field.

17. An apparatus for configuring a transmission configuration without dynamic grant, comprising:
a transceiver unit, configured to receive downlink control information/sidelink control information sent by a first apparatus, wherein the downlink control information/sidelink control information is used for retransmission and is used to configure a first transmission configuration without dynamic grant; and
a processing unit, configured to determine first configuration information of the first transmission configuration without dynamic grant based on the downlink control information/sidelink control information.

18. The apparatus according to claim 17, wherein the downlink control information/sidelink control information comprises a first indicator field, and a first value of the first indicator field indicates that the downlink control information/sidelink control information is used for retransmission.

19. The apparatus according to claim 17 or 18, wherein the downlink control information/sidelink control information comprises a second indicator field, and a second value of the second indicator field indicates that the downlink control information/sidelink control information is used to configure the first transmission configuration without dynamic grant.

20. The apparatus according to any one of claims 17 to 19, wherein the downlink control information/sidelink control information comprises a third indicator field, the third indicator field indicates the first configuration information of the first transmission configuration without dynamic grant, and the first configuration information comprises at least one transmission resource and/or transmission parameter.

21. The apparatus according to claim 20, wherein the third indicator field comprises one indicator field, and the indicator field indicates the first configuration information; or
the third indicator field comprises a plurality of indicator fields, and each of the plurality of indicator fields indicates a corresponding transmission resource and/or transmission parameter.

22. The apparatus according to any one of claims 17 to 21, wherein the downlink control information/sidelink control information comprises a fourth indicator field, the fourth indicator field indicates the first transmission configuration without dynamic grant, the fourth indicator field corresponds to a plurality of transmission configurations without dynamic grant, and the first transmission configuration without dynamic grant is comprised in the plurality of transmission configurations without dynamic grant.

23. The apparatus according to any one of claims 17 to 22, wherein the downlink control information/sidelink control information comprises a fifth indicator field, and the fifth indicator field indicates a modulation order of current retransmission, or adjustment information of the modulation order of the current retransmission relative to a modulation order of initial transmission or previous retransmission.

24. The apparatus according to any one of claims 19, 20, and 23, wherein the second indicator field, the third indicator field, or the fifth indicator field is a modulation and coding scheme MCS field.

25. An apparatus for configuring a transmission configuration without dynamic grant, comprising:
a processing unit, configured to determine downlink control information/sidelink control information, wherein the downlink control information/sidelink control information is used for retransmission and is used to configure a first transmission configuration without dynamic grant; and
a transceiver unit, configured to send the downlink control information/sidelink control information to a first terminal apparatus.

26. The apparatus according to claim 25, wherein the downlink control information/sidelink control information comprises a first indicator field, and a first value of the first indicator field indicates that the downlink control information/sidelink control information is used for retransmission.

27. The apparatus according to claim 25 or 26, wherein the downlink control information/sidelink control information comprises a second indicator field, and a second value of the second indicator field indicates that the downlink control information/sidelink control information is used to configure the first transmission configuration without dynamic grant.

28. The apparatus according to any one of claims 25 to 27, wherein the downlink control information/sidelink control information comprises a third indicator field, the third indicator field indicates first configuration information of the first transmission configuration without dynamic grant, and the first configuration information comprises at least one transmission resource and/or transmission parameter.

29. The apparatus according to claim 28, wherein the third indicator field comprises one indicator field, and the indicator field indicates the first configuration information; or
the third indicator field comprises a plurality of indicator fields, and each of the plurality of indicator fields indicates a corresponding transmission resource and/or transmission parameter.

30. The apparatus according to any one of claims 25 to 29, wherein the downlink control information/sidelink control information comprises a fourth indicator field, the fourth indicator field indicates the first transmission configuration without dynamic grant, the fourth indicator field corresponds to a plurality of transmission configurations without dynamic grant, and the first transmission configuration without dynamic grant is comprised in the plurality of transmission configurations without dynamic grant.

31. The apparatus according to any one of claims 25 to 30, wherein the downlink control information/sidelink control information comprises a fifth indicator field, and the fifth indicator field indicates a modulation order of current retransmission, or adjustment information of the modulation order of the current retransmission relative to a modulation order of initial transmission or previous retransmission.

32. The apparatus according to any one of claims 27, 28, and 31, wherein the second indicator field, the third indicator field, or the fifth indicator field is a modulation and coding scheme MCS field.

33. A computer-readable storage medium, wherein the computer-readable storage medium stores a computer program or instructions, and when the computer program or the instructions are executed, the method according to any one of claims 1 to 8 or the method according to any one of claims 9 to 16 is implemented.

34. A computer program product, comprising a computer program or instructions, wherein when the computer program or the instructions are executed, the method according to any one of claims 1 to 8 or the method according to any one of claims 9 to 16 is implemented.

35. A system, comprising a terminal apparatus and a first apparatus, wherein the terminal apparatus is configured to perform the method according to any one of claims 1 to 8, and the first apparatus is configured to perform the method according to any one of claims 9 to 16.

36. A chip, comprising a processor, wherein the processor is configured to execute a computer program or instructions, and when the processor executes the computer program or the instructions, the method according to any one of claims 1 to 8 or the method according to any one of claims 9 to 16 is implemented.

37. A chip, comprising a logic circuit and an input/output interface, wherein the logic circuit is configured to: be coupled to the input/output interface and transmit data through the input/output interface, to perform the method according to any one of claims 1 to 8 or the method according to any one of claims 9 to 16.
